# EUROPÄISCHE PATENTSCHRIFT

(11) **EP 2 400 683 B1**
(45) Veröffentlichungstag und Bekanntmachung des Hinweises auf die Patenterteilung: **18.09.2013**
(21) Anmeldenummer: 10167567.6
(22) Anmeldetag: 28.06.2010
(51) Int. Cl.: H04L 1/00

(54) **Decodierung eines paketbasierten Datenstroms**
Decoding a packet-based data flow
Décodage d'un flux de données à base de paquets

(43) Veröffentlichungstag der Anmeldung: 28.12.2011
(73) Patentinhaber: Fraunhofer-Gesellschaft zur Förderung der Angewandten Forschung e.V., 80686 München (DE); Friedrich-Alexander-Universität Erlangen-Nürnberg, 91054 Erlangen (DE)
(72) Erfinder: Mull, Andreas, 90482, Nürnberg (DE); Forster, Christian, 90403, Nürnberg (DE); Hildinger, Rainer, 91052, Erlangen (DE); Gerhäuser, Prof. Heinz, 91344, Waischenfeld (DE)
(74) Vertreter: Schenk, Markus

(56) Entgegenhaltungen:
- EP-A1- 1 732 235
- WO-A1-2006/077523
- WO-A1-2006/123231
- US-A1- 2006 268 726
- AITSAB O ET AL: "Performance of Reed-Solomon block turbo code", GLOBAL TELECOMMUNICATIONS CONFERENCE, 1996. GLOBECOM '96. 'COMMUNICATI ONS: THE KEY TO GLOBAL PROSPERITY LONDON, UK 18-22 NOV. 1996, NEW YORK, NY, USA,IEEE, US, vol. 1, 18 November 1996 (1996-11-18), pages 121-125, XP010220336, DOI: 10.1109/GLOCOM.1996.594345 ISBN: 978-0-7803-3336-9

## Beschreibung

Die vorliegende Erfindung bezieht sich auf eine Decodierung eines paketbasierten Datenstroms, der mit einem ersten systematischen Vorwärtsfehlerschutz-Codes geschützte und eingekapselte Datenpakete und Redundanzdaten des ersten systematischen Vorwärtsfehlerschutz -Codes transportiert, wie sie beispielsweise im Zusammenhang mit der Übertragung gemäß dem DVB-H-Standard verwendbar ist.

Rundfunksysteme nach DVB-H [2] sind IP-basierte Systeme, die das Internetprotokoll zur Übertragung von beliebigen Medieninhalten (Radio, Fernsehen, Datendienste, Software, etc.) nutzen. Mehrere Medieninhalte können dabei in einem DVB-H- bzw. DVB-SH-Multiplex zur eigentlichen Übertragung zusammengefasst werden. Dies geschieht durch Enkapsulierung der IP-Datenströme nach dem Verfahren der Multi-Protocol-Encapsulation (MPE) [3], welche ihrerseits wiederum auf die Paketübertragung von DVB [1] aufbaut.

Bei Benutzung von IP-Datacast (IPDC) werden in den oben genannten Verfahren (DVB-H und DVB-SH) IP-Pakete, die ihrerseits wiederum UDP-Pakete enthalten, per MPE übertragen. Dabei können die Pakete an Multicast-Adressen versandt werden. Dies wird von [2, 4, 10] konsequent vorgesehen.

Das IP-Protokoll sieht die Möglichkeit vor, dem Nachrichtenkopf eines Pakets zusätzliche Informationen anzuhängen (Options) [7]. Kann ein Empfänger eine Option nicht auswerten, da er ihre Definition nicht kennt, ignoriert er sie einfach.

Bei DVB-H und DVB-SH werden aufbauend auf MPE die Fehlerschutz-Verfahren MPE-FEC und MPE-IFEC eingeführt. Neben der unveränderten Übertragung der Nutzdaten können hierdurch optional Fehlerschutzinformationen unter Zuhilfenahme systematischer Fehlerkorrekturcodes mitgesendet werden. Derzeit kann bei DVB-H das Verfahren MPE-FEC mit dem Reed-Solomon-Code RS(255,191) eingesetzt werden, das eine Verbesserung des Fehlerschutzes innerhalb eines Timeslice-Burst erlaubt. Bei DVB-SH kann alternativ MPE-IFEC mit demselben Reed-Solomon-Code eingesetzt werden. Darüber hinaus sind weitere Fehlerschutz-Codes verfügbar, wie z. B. der Raptor-Code. Dieses Verfahren erlaubt einen Fehlerschutz, der mehrere Timeslice-Bursts überspannt.

Beide Verfahren füllen die Applikationsdaten spaltenweise in eine Tabelle respektive mehrere Tabellen ein. Ein Paket aus Nutzdaten kann darin im kleinsten Fall nur einen Teil einer Spalte, im größten Fall mehrere aufeinander folgende Spalten belegen. Senderseitig wird der Fehlerschutz zeilenweise berechnet und das Ergebnis in eine weitere Tabelle zeilenweise eingetragen. Während die Nutzdaten entsprechend MPE übertragen werden, wird jede einzelne Spalte der Fehlerschutztabelle im Ganzen als eine Transport-Strom-Sektion übertragen.

Entsprechend der Dimensionierungen aus den in [2, 5] betrachteten Beispielen werden oft MPE-FEC-Tabellen mit 512 bzw. 1024 Zeilen verwendet. Wie [11] zeigt, sind die Verfahren bei IP-Paketlängen zwischen 1024 und 2048 Byte und bei Tabellengrößen von 1024 Zeilen am effizientesten. Außerdem ist es für weitere Betrachtungen nahe liegend, die Paketgrößen grob entsprechend der Spaltenlängen zu dimensionieren.

Im Standard und den Implementation-Guidelines [5, 6] werden Algorithmen zur Decodierung dieser Fehlerschutzmechanismen vorgeschlagen, wonach eine fehlerhaft empfangene Transportstrom-Sektion zur Markierung aller von dieser bedeckter Tabellenspalten als fehlerhaft führt. Ebenso resultiert auch ein Übertragungsfehler, der nur ein Transportstrom-Paket darin betrifft, zur Auslöschung der gesamten Transportstrom-Sektion und wiederum aller davon abgedeckter Spalten.

Neben den oben genannten Implementierungsvarianten existieren Vorschläge zur Rekonstruktion der Empfangsdaten, die MPE-FEC auch in den Fällen anwenden, bei denen eine CRC-Prüfung auf Ebene der Transportstrom-Sektionen fehlschlägt [8]. Dabei werden fehlerhaft empfangene Transportstrom-Pakete nicht verworfen, sondern unter Beachtung ihrer Fehlerhaftigkeit weiter verwendet. In Folge dessen werden auch betroffene Transportstrom-Sektionen fragmentweise entsprechend weiter verwertet. Diese Verfahren nutzen mehr Speicher, um nicht oder nur fehlerhaft empfangene Daten akkurater zu markieren. Dabei werden nicht mehr nur ganze Spalten der Tabelle als fehlerhaft/fehlend markiert, sondern vielmehr wird jedem enthaltenen Symbol zusätzliche Information zu dessen Korrektheit zugeordnet. Diese Informationen werden mit dem Fragment bis zur endgültigen Decodierung der Fehlerschutztabelle bzw. deren Abweisung mitgeführt. Transportstrom-Sektionen korrekt empfangener Transportstrom-Pakete werden direkt verwendet und deren Symbole als korrekt markiert. Transportstrom-Sektionen, deren Transportstrom-Pakete fehlerhaft empfangen wurden, sind als fehlerhaft zu markieren und unter Vorbehalt weiter zu verwenden. Das CRC-Feld einer Transportstrom-Sektion wird dabei erst nach einer Decodierung des Vorwärtsfehlerschutzes geprüft oder ganz ignoriert.

Diese Verfahren ziehen typischerweise Informationen aus der Sicherungsschicht (MPEG-TS), wie etwas das TEI-Feld hinzu, um genauere Aussagen über die Lage der fehlerhaften Symbole zu treffen. Nicht betroffene Teile von Transportstrom-Sektionen bleiben somit weiter nutzbar. Mit diesen Verfahren lassen sich somit bessere Ergebnisse erzielen als mit dem im Standard beschriebenen Basis-Verfahren.

Weitere Vorschläge [9] umfassen eine hierarchische Decodierung der übertragenen Daten. Diese baut auf progressiven Verfahren wie demjenigen aus [8] auf. Bei der Dekapsulierung wird pro Gruppe von empfangenen Symbolen (Transportstrom-Sektion, Transportstrom-Paket) unterschieden, ob die enthaltenen Symbole richtig, unsicher oder nicht empfangen wurden. Laut Sicherungsschicht fehlerhaft markierte Transportstrom-Pakete werden bei passenden Daten der Verwaltungsstruktur dennoch als unsicher in die Fehlerschutz-Matrix bzw. "Application Data Table" (ADT) oder "Application Data Sub Table" (ADST) eingetragen. Bereiche nicht empfangener Pakete werden in der Tabelle mit der Markierung "nicht empfangen" aufgefüllt.

In Zeilen der Matrix, in denen die Fehlerschutz-Decodierung basierend auf Ausfällen angewendet werden kann (Erasures), geschieht dies. Sind mehr Symbole unsicher oder überhaupt nicht empfangen worden, als Paritätssymbole verfügbar sind, kann auch ein Block-Code im Fehlerkorrekturmodus nicht mehr korrigieren, da auch dann 2S+E <= n-k gilt, eben mit S=0, und es wird Fehler-Decodierung angewandt (Errors). Sind nun genügend unsicher empfangene Symbole dennoch korrekt, hatte die Fehlerkorrektur Erfolg und die Zeile kann erfolgreich rekonstruiert werden. Ansonsten schlägt die Decodierung fehl.

Wünschenswert wäre eine Verbesserung des Fehlerschutzes, die es allerdings ermöglicht, unmerklich für bereits existierende Applikationen nachträglich eingeführt zu werden.

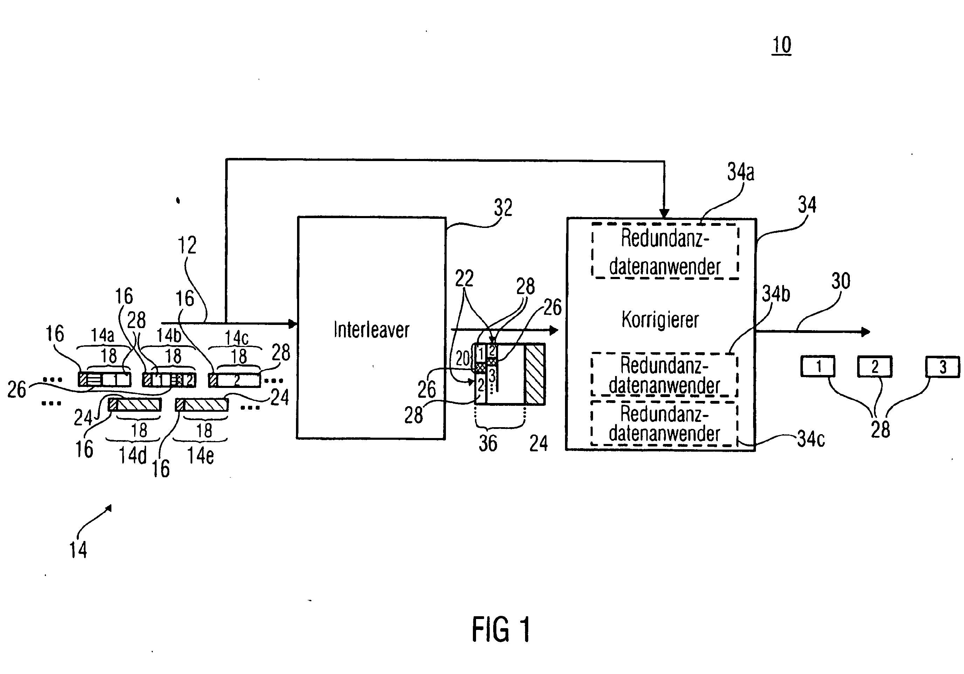

In Aitsab und Pyndiah, Performance of Reed-Solomon Block Turbo Code, Globecom 1996, p. 121-125, (XP 10 220 336) wird eine Möglichkeit beschrieben, um die Leistungsfähigkeit eines Produkt-Codes zu erhöhen. Dabei werden Informationssymbole in einer Tabelle per Interleaving eingetragen, wobei der Schutz allerdings zeilenweise und spaltenweise erfolgt, und zwar zunächst zeilenweise und daraufhin spaltenweise, so dass durch den ersten systematischen zeilenweisen Code Spalten hinzugefügt werden, und dann durch den zweiten spaltenweisen systematischen Code zu der so durch die FEC-Spalten des ersten Codes vergrößerte Matrix Zeilen hinzugefügt werden (vgl. Fig. 1). Das verbessert nun die Leistungsfähigkeit eines Reed-Solomon-Block-Turbo Codes, indem ein RS-Code für sowohl den spaltenweisen als auch den zeilenweisen Schutz verwendet wird, und indem eine iterierte Decodierung verwendet wird, um das Zusammenspiel beider Codes optimal auszunutzen.

In der EP 1 732 235 A1, worauf der Oberbegriff des Anspruchs 1 beruht, führt eine Empfangsvorrichtung während einer Dienstperiode eines Rundsendesignals einen Empfang aus, und während einer Nicht-Dienstperiode schaltet sie in einen Energiesparmodus. Die Dienstperiode besteht aus einer ersten Periode, während derer eine Applikationsdatentabelle eines MPE-FEC-Rahmens übertragen wird, und einer auf die erste Periode folgenden zweiten Periode, während derer eine RS-Datentabelle des MPE-FEC-Rahmens übertragen wird. Eine Fehlerkorrektureinheit 12 führt entweder eine Fehlerkorrektur, die die gesamte RS-Datentabelle gemäß MPE-FEC verwendet, oder eine Löschkorrektur, die eine gleiche Anzahl von Paritätsbytes wie Bytes, die Bitfehler aufweisen, verwendet, durch. Wenn die Bitfehler durch die Fehlerkorrektureinheit 12, die eine Fehlerkorrektur durchführt, korrigiert werden, schaltet eine Leistungssteuereinheit 30 eine Empfangsschaltung in einen Energiesparmodus, bevor die zweite Periode endet.

Die Aufgabe der vorliegenden Erfindung besteht deshalb darin, ein Schema zur Decodierung eines paketbasierten Transportstroms, der mit einem ersten systematischen Vorwärtsfehlerschutz-Code geschützte und eingekapselte Datenpakete und Redundanzdaten des ersten systematischen Vorwärtsfehlerschutz-Codes transportiert, zu schaffen, so dass unter Bewahrung einer Abwärtskompatibilität eine effektive Verbesserung des Fehlerschutzes ermöglicht wird.

Diese Aufgabe wird durch eine Vorrichtung gemäß Anspruch 1 und ein Verfahren gemäß Anspruch 15 gelöst.

Eine erfindungsgemäße Decodierung eines Paket-basierten Datenstroms, der mit einem ersten systematischen Vorwärtsfehlerschutz-Code geschützte und eingekapselte Datenpakete und Redundanzdaten des ersten systematischen Vorwärtsfehlerschutz-Codes transportiert, umfasst ein Füllen einer Korrekturtabelle mit den Datenpaketen und den Redundanzdaten des ersten systematischen Vorwärtsfehlerschutz-Codes aus Nutzdatenabschnitten von Transportstrom-Paketen des Paket-basierten Transportstroms, wobei die Redundanzdaten des ersten systematischen Vorwärtsfehlerschutz-Codes die Datenpakete schützen, mit denen die Korrekturtabelle gefüllt wird. Ein Fehler, wie z.B. ein harter Fehler, in den Datenpaketen, mit denen die Korrekturtabelle gefüllt ist, wird dann korrigiert, indem, in Runden, die Redundanzdaten des ersten systematischen Vorwärtsfehlerschutz-Codes, Redundanzdaten eines zweiten systematischen Vorwärtsfehlerschutz-Codes, die in jedem Datenpaket enthalten sind und Nutzdaten in dem jeweiligen Datenpaket schützen, und Redundanzdaten eines dritten systematischen Vorwärtsfehlerschutz-Codes, die die Nutzdatenabschnitte in den Transportstrom-Paketen schützen, rekursiv ausgewertet werden, und zwar unter, in einer Runde der rekursiven Auswertung, Auswertung der Redundanzdaten des ersten, zweiten und dritten systematischen Vorwärtsfehlerschutz-Codes.

Ein der vorliegenden Erfindung zugrunde liegender Kerngedanke besteht darin, dass existierende Datenpaket-Strukturen zumeist ermöglichen, dass nachträgliche Optionen in der Struktur zugelassen werden, die bei existierenden Empfängern der Datenpakete nicht zu Fehlern führen, wie z. B. durch das Reservieren von Datenpaket-Optionen, wie z. B. in Headern der Datenpakete, für zukünftige Anwendungen, zusammen mit der Forderung der Anzeige einer Längenangabe, die für ältere Empfänger syntaktisch auffindbar ist und verwendbar ist, um die syntaktische Analyse der Datenpakete unter Überspringen der unbekannten Zusatzdaten fortzusetzen. Diese zumeist vorhandene Möglichkeit ermöglicht es demnach, zusätzliche Redundanzdaten, nämlich die oben genannte Redundanzdaten des zweiten systematischen Vorwärtsfehlerschutz-Codes, nachträglich in die Datenpaketstruktur einzuführen und dann mittels rekursiver Auswertung zusammen mit den Redundanzdaten des ersten systematischen Vorwärtsfehlerschutz-Codes und den Redundanzdaten des dritten systematischen Vorwärtsfehlerschutz-Codes rekursiv auszuwerten, wodurch die Effektivität des durch die drei Vorwärtsfehlerschutz-Codes bewirkten effektiven gesamten Fehlerschutzes gegenüber einer individuellen Auswertung dieser Vorwärtsfehlerschutz-Codes oder gegenüber einer Auswertung derselben, wonach nur zwei dieser Vorwärtsfehlerschutz-Codes zusammen rekursiv verwendet werden, erhöht wird. Der systematische Charakter des zweiten Vorwärtsfehlerschutz-Codes ermöglicht dabei erst die für ältere Decodierer bzw. Empfänger der Datenpakete, die auf die Integration der Redundanzdaten des zweiten Vorwärtsfehlerschutz-Codes noch nicht vorbereitet sind, transparente Integration in die Datenpakete. Der systematische Charakter der Redundanzdaten des ersten und dritten Vorwärtsfehlerschutz-Codes der niedrigeren Protokollschichten ermöglicht die rekursive Auswertung der drei Vorwärtsfehlerschutz-Codes.

Von einer anderen Warte aus betrachtet besteht ein Kerngedanke der vorliegenden Erfindung auch darin, erkannt zu haben, dass es möglich ist, Datenpakete, die selbst bereits durch einen ersten systematischen Vorwärtsfehlerschutz-Code geschützt und eingekapselt sind, indem die Redundanzdaten des ersten systematischen Vorwärtsfehlerschutz-Codes die Datenpakete in einem durch einen Interleaver in eine Korrekturtabelle eingetragenen Zustand schützen, dadurch stärker zu schützen, dass einerseits auf der Seite der tieferen Protokollschicht Datenpakete und Redundanzdaten des ersten systematischen Vorwärtsfehlerschutz-Codes durch den dritten systematischen Vorwärtsfehlerschutz-Code des paketbasierten Transportstroms geschützt werden, und auf der anderen Seite, d. h. der Seite der höheren Protokollschicht, durch die Redundanzdaten des zweiten Vorwärtsfehlerschutz-Codes geschützt werden, die wiederum in den einzelnen Datenpaketen enthalten sind. Die rekursive Auswertung der drei Fehlerschutz-Codes wird wiederum durch den systematischen Charakter der zwei Fehlerschutz-Codes der niedrigeren Protokollschichten ermöglicht, und die Abwärtskompatibilität zu existierenden Decodern wird durch den systematischen Charakter des ersten Vorwärtsfehlerschutz-Codes ermöglicht.

Bevorzugte Ausführungsbeispiele und Ausgestaltungen werden in den Unteransprüchen definiert. Insbesondere werden bevorzugte Ausführungsbeispiele der vorliegenden Erfindung nachfolgend Bezug nehmend auf die beigefügten Zeichnungen erläutert. Es zeigen:
- Fig. 1: ein schematisches Blockschaltbild einer Vorrichtung zur Decodierung eines Paket-basierten Transportstroms gemäß einem Ausführungsbeispiel;
- Fig. 2: eine schematische Darstellung zur Veranschaulichung der Effizienzsteigerung bei der rekursiven Anwendung zweier Vorwärtsfehlerschutz-Codes;
- Fig. 3: eine schematische Zeichnung zur Veranschaulichung der gemeinsamen rekursiven Auswertung von Fehlerschutz-Codes dreier aufeinanderfolgender Protokollschichten gemäß dem OSI-System gemäß einem Ausführungsbeispiel;
- Fig. 4: eine schematische Darstellung zur Veranschaulichung einer Möglichkeit zur Integration der Redundanzdaten des zweiten systematischen Vorwärtsfehlerschutz-Codes in die Datenpakete gemäß einem Ausführungsbeispiel;
- Fig. 5: eine schematische Darstellung des Aufbaus von Datenpaketen mit den integrierten Redundanzdaten des zweiten systematischen VorwärtsfehlerschutzCodes gemäß einem Ausführungsbeispiel; und
- Fig. 6: eine Momentaufnahme beim Befüllen einer Korrekturtabelle gemäß einem Ausführungsbeispiel.

Fig. 1 zeigt eine Vorrichtung zur Decodierung eines Paket-basierten Transportstroms, der mit einem ersten systematischen Vorwärtsfehlerschutz-Codes geschützte und eingekapselte Datenpakete und Redundanzdaten des ersten systematischen Vorwärtsfehlerschutz-Codes transportiert. Die Vorrichtung ist allgemein mit dem Bezugsbescheid 10 angezeigt. Sie umfasst einen Eingang 12, an dem der paketbasierte Transportstrom eintrifft. Der paketbasierte Transportstrom 14 transportiert Datenpakete einer höheren Protokollschicht in Transportstrom-Paketen, von denen in Fig. 1 exemplarisch fünf Transportstrom-Pakete 14a-14e gezeigt sind. Insbesondere transportiert der Transportstrom, der allgemein mit dem Bezugszeichen 14 angezeigt wird, nicht nur die Datenpakete einer höheren Protokollschicht, sondern auch die Redundanzdaten eines ersten systematischen Vorwärtsfehlerschutz-Codes, mit dem diese Datenpakete geschützt und eingekapselt sind.

Die Transportstrom-Pakete 14a-14e weisen Redundanzdaten 16 eines dritten systematischen Vorwärtsfehlerschutz-Codes auf, die die Nutzdatenabschnitte, d. h. die restlichen Abschnitte, in den Transportstrom-Paketen 14a-14e schützen. Gemäß dem Ausführungsbeispiel von Fig. 1 umfasst jedes Transportstrom-Paket 14a-14e einen Nutzdatenabschnitt 18 und ein zugeordnetes Redundanzwort 16, die zusammen ein systematisches Codewort des dritten systematischen Vorwärtsfehlerschutz-Codes bilden, aber natürlich bestünde auch eine Möglichkeit für eine andere Aufteilung der Redundanzdaten auf die Transportstrom-Pakete bzw. die Möglichkeit für eine andere Positionierung der Redundanzdaten des dritten systematischen Vorwärtsfehlerschutz-Codes relativ zu den Nutzdaten derselben, mit denen sie jeweils systematische Codewörter des dritten systematischen Vorwärtsfehlerschutz-Codes bilden. Insbesondere sind die Redundanzdaten 16 in Fig. 1 so dargestellt, als seien sie jeweils vorne in den TS-Paketen 14a-14e angeordnet, dabei ist eine Positionierung jeweils am Ende der TS-Pakete 14a-14e natürlich ebenfalls möglich.

Die Datenpakete, die durch die Transportstrom-Pakete 14a-14e transportiert werden, müssen nicht in einer 1-zu-1-Zuordnung auf die Transportstrom-Pakete verteilt sein, und auch nicht so, dass jedes Datenpaket nur genau einem Transportstrom-Paket 14a-14e zugeordnet wäre. In Fig. 1 ist exemplarisch ein Datenpaket "1" veranschaulicht, das über den Nutzdatenabschnitt 18 eines Transportstrom-Pakets 14a und einen Anfang eines Nutzdatenabschnittes 18 eines Transportstrom-Pakets 14b verteilt ist, wobei dieses Datenpaket auch mit dem Bezugszeichen 20 angezeigt ist. Ein weiteres Datenpaket 22 ist so dargestellt, dass es auf ein Ende des Nutzdatenabschnittes 18 des Transportstrom-Pakets 14b, den Nutzdatenabschnitt 18 des Transportstrom-Pakets 14c und ggf. noch weitere Nutzdatenabschnitte anderer Transportstrom-Pakete verteilt ist. Es ist beispielsweise möglich, dass die Transportstrom-Pakete 14a-14e feste Länge besitzen oder einen Header (nicht gezeigt) besitzen, in welchem sie eine quantisierte Längenangabe aufweisen, wonach sie auf eine vorbestimmte Länge aus einem vorbestimmten Satz von möglichen Transportstrom-Paketlängen festgelegt sind. Die Transportstrom-Pakete könnten in ihren Headern beispielsweise auch Zählerindizes aufweisen, wonach die Transportstrom-Pakete 14a-14r gemäß einer Reihenfolge sortiert werden können. Die Datenpakete 20 und 22 können - auf diese Weise in ihrer Länge und Abfolge festgelegt - auf Datenabschnitte 18 der Transportstrom-Pakete 14a-14e entweder nahtlos verteilt werden, d. h. ohne die Verwendung von Füll-Bits, oder aber es könnten Füll-Bits zum Auffüllen des Nutzdatenabschnitts 18 eines Transportstrom-Pakets verwendet werden, wenn ein Datenpaket innerhalb eines Nutzdatenabschnitts 18 eines Transportstrom-Pakets endet, um das nächste Datenpaket in einem nächsten Transportstrom-Paket bzw. dessen Nutzdatenabschnitt beginnen zu lassen, wobei natürlich auch weitere Möglichkeiten bestünden. Ebenso ist es möglich, dass eine Steuerdaten aus Headern der Datenpakete in den einzelnen Fragmenten in den Transportstrompaketen in an sich redundanter Weise wiederholt werden. In den nachfolgenden Ausführungen zu weiteren Ausführungsbeispielen der vorliegenden Erfindung handelt es sich bei den Transportstrom-Paketen 14a-14e beispielsweise um MPEG-TS-Pakete.

Wie bereits im Vorhergehenden erwähnt, sind die Datenpakete 20 und 22 mit einem ersten systematischen Vorwärtsfehlerschutz-Code geschützt und eingekapselt. Dazu transportieren die Transportstrom-Pakete 14a-14e nicht nur die Datenpakete 20 und 22, sondern auch die Redundanzdaten 24 des ersten systematischen Vorwärtsfehlerschutz-Codes. Obwohl auch andere Möglichkeiten zur Verteilung der Redundanzdaten 24 auf die Transportstrom-Pakete 14a-14e des Transportstroms 14 bestünden, ist in Fig. 1 ein Ausführungsbeispiel dargestellt, wonach die Redundanzdaten 24 des ersten systematischen Vorwärtsfehlerschutz-Codes in eigenen Transportstrom-Paketen übertragen werden, in Fig. 1 exemplarisch die Transportstrom-Pakete 14d und 14e im Unterschied zu den Transportstrom-Paketen 14a-14c, in denen die Datenpakete 20 und 22 enthalten sind.

Die Datenpakete selbst enthalten Redundanzdaten 26 eines zweiten systematischen Vorwärtsfehlerschutz-Codes, die Nutzdaten 28 in dem jeweiligen Datenpaket 20 und 22 schützen. In Fig. 1 ist exemplarisch der Fall dargestellt, wonach jedes Datenpaket 20, 22 ein Redundanzdatenwort 26 aufweist, das zusammen mit einem disjunkten Rest des jeweiligen Datenpakets 20, 22 ein systematisches Codewort des zweiten systematischen Vorwärtsfehlerschutz-Codes bildet, ggf. unter Erweiterung des jeweiligen Datenpakets um vorbestimmte Füll-Bits, um eine vorbestimmte konstante Länge zu erreichen, da die Datenpakete 20, 22 exemplarisch eine variable Länge aufweisen können, wie es in Fig. 1 exemplarisch auch gezeigt ist.

Wie es im Folgenden noch beschrieben werden wird, kann es sich bei den Datenpaketen 20, 22 beispielsweise um IP-Pakete handeln.

Die Vorrichtung 10 umfasst ferner einen Ausgang 30 zur Ausgabe der Nutzdaten 28 der Datenpakete 20, 22, wobei zwischen den Eingang 12 und den Ausgang 30 in der genannten Reihenfolge ein Interleaver 32 und ein Korrigierer 34 geschaltet sind, wobei, wie es in Fig. 1 gezeigt ist, der Korrigierer 34 nicht nur über den Interleaver 32, sondern auch unmittelbar mit dem Eingang 12 verbunden ist.

Der Interleaver ist ausgebildet, um mit den Datenpaketen 20, 22 und den Redundanzdaten 24 des ersten systematischen Vorwärtsfehlerschutz-Codes aus den Nutzdatenabschnitten 18 der Transportstrom-Pakete 14a-14e eine Korrekturtabelle 36 zu füllen, wobei die Redundanzdaten 24 des ersten systematischen Vorwärtsfehlerschutz-Codes die Datenpakete 20, 22 schützen, mit denen die Korrekturtabelle 36 gefüllt wird. Gemäß dem in Fig. 1 exemplarisch veranschaulichten Fall ist der Interleaver 32 ausgebildet, um die Korrekturtabelle 36 spaltenweise mit den Datenpaketen 20, 22 zu füllen, wobei die Redundanzdaten 24 des ersten systematischen Vorwärtsfehlerschutz-Codes ein Redundanzwort pro Zeile der Korrekturtabelle 36 aufweisen können, und jedes Redundanzwort der Redundanzdaten 24 des ersten systematischen Vorwärtsfehlerschutz-Codes zusammen mit einem Ausschnitt der Datenpakete 20, 22 in der jeweiligen Zeile der Korrekturtabelle, d. h. dem Ausschnitt der Datenpakete, der sich in der jeweiligen Zeile der Korrekturtabelle 36 befindet, ein systematisches Codewort des ersten systematischen Vorwärtsfehlerschutz-Codes bilden kann.

Gemäß nachfolgend beschriebenen Ausführungsbeispielen handelt es sich bei dem ersten systematischen Vorwärtsfehlerschutz-Code beispielsweise um einen Reed-Solomon-Code, ebenso wie es sich beispielsweise bei den anderen beiden systematischen Vorwärtsfehlerschutz-Codes um Reed-Solomon-Codes handeln kann. Insbesondere kann es sich, wie es im Folgenden noch beschrieben wird, bei dem ersten systematischen Vorwärtsfehlerschutz-Code um einen MPE-FEC-Code handeln. Eine maximale Paketgröße der Datenpakete 20, 22 kann so eingestellt sein, dass sie kleiner als eine Größe der Korrekturtabelle 36 ist, so dass die Korrekturtabelle 36 mit mehr als einem Datenpaket 20, 22 gefüllt wird. Eine maximale Paketgröße der Transportstrom-Pakete 14a-14e kann ebenfalls kleiner als eine Größe der Korrekturtabelle 36 sein, so dass in dem exemplarischen Fall beispielsweise, dass die Transportstrom-Pakete einzelne systematische Codewörter des dritten systematischen Vorwärtsfehlerschutz-Codes bilden, mehrere solcher systematischen Codewörter des dritten systematischen Vorwärtsfehlerschutz-Codes mit der Korrekturtabelle 36 überlappen. Insbesondere kann, wie im Vorhergehenden erwähnt, die maximale Paketgröße der Transportstrom-Pakete 14a-14e kleiner sein als eine maximale Paketgröße der Datenpakete 20, 22.

Der Korrigierer 34 ist ausgebildet, um harte Fehler in den Datenpaketen 20, 22, mit denen die Korrekturtabelle 36 gefüllt ist, durch, in Runden, rekursives Auswerten der Redundanzdaten 24, 26 und 16 der drei systematischen Vorwärtsfehlerschutz-Codes zu korrigieren, und zwar unter Auswertung der Redundanzdaten der drei systematischen Vorwärtsfehlerschutz-Codes in einer Runde der rekursiven Auswertung. Die Funktionsweise des Korrigierers 34 wird in dem Zusammenhang mit der Beschreibung der Funktionsweise der gesamten Vorrichtung 10 der Fig. 1 nun im Folgenden näher beschrieben.

Wie es im Vorhergehenden bereits beschrieben worden ist, treffen die Transportstrom-Pakete 14a-14e am Eingang 12 ein, wobei es aufgrund von Übertragungsfehlern oder anderen Rauschquellen in den Transportstrom-Paketen 14a-14e zu Fehlern gekommen sein kann. Die Vorrichtung 10 kann beispielsweise in Vorschaltung zu dem Eingang 12 eine Verarbeitungseinheit niedrigerer Protokollschichten aufweisen, die dazu vorgesehen ist, die Transportstrom-Pakete 14a-14e aus einer drahtgebundenen oder drahtlosen Übertragungsstrecke zu gewinnen. Diese vorgeschaltete Verarbeitungseinheit kann beispielsweise einen Demodulator aufweisen, der ausgebildet ist, um aus einem Übertragungskanal Modulationssymbole oder Modulationssymbolwahrscheinlichkeiten zu gewinnen, einen Abbilder, um die Modulationssymbole auf Codeworte abzubilden, unter zwar möglicherweise u.a. auch zur Verwirklichung eines Fehlerschutzes, wie z. B. eines Vorwärtsfehlerschutzes, wobei derselbe beispielsweise durch einen Faltungscode realisiert sein kann und der Abbilder eine Währscheinlichkeitsoptimierungsalgorithmus, wie z.B. eine Trellisdiagrammauswertung, verwendet. Unabhängig von der genauen Art der Vorverarbeitung kann es beispielsweise sein, dass die Transportstrom-Pakete 14a-14e an dem Dateneingang 12 bereits in Form von harten Bits vorliegen bzw. in Form von harten Symbolen, d.h. beispielsweise entweder als eine Eins oder eine Null. Es kann auch sein, dass manche der Bits bzw. Symbole der Transportstrom-Pakete 14a-14e als fehlerhaft markiert sind, so dass es in dem Fall binärer Symboldarstellung beispielsweise jedem Symbol der Transportstrom-Pakete 14a-14e eindeutig entweder eine Null, eine 1 oder ein "Defekt" zugeordnet ist.

Der Interleaver 32 füllt die Tabelle mit den Datenpaketen 20, 22, wie es im Vorhergehenden beschrieben worden ist, also durch sequenzielles Einfügen der Symbole bzw. Bits der Datenpakete 20, 22 gemäß ihrer Reihenfolge, wie sie durch entsprechende Sequenznummem in den Headern der Datenpakete 20, 22 festgelegt ist, spaltenweise von oben nach unten in die Tabelle 36, und unter Wechsel zur nächsten Spalte rechts von der aktuellen Spalte, sobald die aktuelle Spalte voll ist. Der Interleaver 32 füllt die Tabelle 36 nicht notwendigerweise vollständig mit den Symbolen bzw. Bits der Datenpakete 14a-14e. Nach geeigneten Regeln kann es sein, dass der Interleaver 32 die Tabelle 36 nicht vollständig füllt und den Rest mit vorbestimmten Füll-Bits, wie z. B. Nullen, ausfüllt bzw. voreingestellt hat.

Der Korrigierer 34 ist dafür zuständig, Fehler in den Datenpaketen 20, 22 zu korrigieren. Er arbeitet rekursiv in Runden und berücksichtigt binnen einer Runde die Redundanzdaten 16, 24 und 26. Der Korrigierer 34 ist beispielsweise dazu ausgebildet, während des rekursiven Auswertens der Redundanzdaten 16, 24 und 26 zu protokollieren, welche Teile der Korrekturtabelle bereits als fehlerfrei identifiziert wurden, wobei ein verbleibender Teil der Korrekturtabelle 36 einen zu korrigierenden Teil darstellt. Beispielsweise wertet der Korrigieren 34 in einer ersten Runde die Redundanzdaten eines vorbestimmten ersten des ersten bis dritten systematischen Vorwärtsfehlerschutz-Codes aus. Dieser vorbestimmte erste Vorwärtsfehlerschutz-Code kann beispielsweise der Vorwärtsfehlerschutz-Code der niedrigsten Protokollschicht sein, d. h. die Redundanzdaten 16 des dritten systematischen Vorwärtsfehlerschutz-Codes. Als Ergebnis dieser Auswertung identifiziert der Korrigierer 34 die Datenpakete 20, 22 als fehlerfrei oder, falls derselbe einen Fehler in denselben erkennt, korrigiert er sie soweit wie möglich unter Verwendung des vorbestimmten ersten Vorwärtsfehlerschutz-Codes. In dem exemplarisch in Fig. 1 dargestellten Fall, in welchem eine 1-zu-1-Zuordnung zwischen Transportstrom-Paketen 14a-14e einerseits und systematischen Codewörtern des systematischen Vorwärtsfehlerschutz-Codes andererseits existiert, bedeutet dies, dass der Korrigierer 34 die Nutzdatenabschnitte 18 von solchen Transportstrom-Paketen 14a-14e als fehlerfrei identifiziert, bei denen kein Fehler erkannt worden ist, solche Nutzdatenabschnitte 18 korrigiert, die aufgrund des zugeordneten Redundanzdatenwortes 16 korrigierbar sind, und diejenigen Nutzdatenabschnitte 18 als fehlerhaft markiert, die zu Transportstrom-Paketen gehören, die Fehler besaßen, aber nicht korrigierbar waren.

Als Ergebnis der Auswertung der Redundanzdaten des ersten vorbestimmten systematischen Vorwärtsfehlerschutz-Codes verbleibt ein erster fehlerbehafteter Anteil der Datenpakete 20, 22 in der Korrekturtabelle 36 zurück. Der Korrigierer 34 verwirft die Datenpakete in der Tabelle 36 allerdings nicht. Vielmehr führt der Korrigierer 34 die aktuelle Runde fort. Der Korrigierer 34 wertet in dem Fall, dass bei der Auswertung der Redundanzdaten des vorbestimmten ersten Vorwärtsfehlerschutz-Codes ein Fehler erkannt wird und eine vollständige Korrektur innerhalb der Datenpakete in der Tabelle 36 nicht möglich ist, die Redundanzdaten der anderen beiden systematischen Vorwärtsfehlerschutzcodes aus, um Fehler in dem ersten fehlerbehafteten Anteil der Datenpakete 20, 22 in der Tabelle 36 zu korrigieren, um eine echte Teilmenge des ersten fehlerbehafteten Anteils als einen zweiten fehlerbehafteten Anteil zu erhalten. Fehler in diesem Zweiten fehlerbehafteten Anteil korrigiert der Korrigierer in einer oder mehreren folgenden Runden, in welchen der Korrigierer die Redundanzdaten 16, 24 und 26 auf entsprechende Weise anwendet. In anderen Worten ausgedrückt, steht der Korrigierer 34 beispielsweise vor Beginn der Korrektur der zur lösenden Aufgabe gegenüber, die Nutzdaten 28 der Datenpakete 20, 22 - falls fehlerhaft - zu korrigieren und am Ausgang 30 auszugeben. Auf dem Weg dahin korrigiert der Korrigierer 34 ggf. noch Redundanzdaten, wie z.B. die Redundanzdaten 24 und 26, die ja durch die Redundanzdaten 16 ebenso geschützt werden. Zur Beginn weiß der Korrigierer 34 ggf. schon Abschnitte in den am Eingang eingehenden Daten 12, die fehlerbehaftet sind, notwendig ist dies aber nicht. Jedenfalls liegen aber die Daten beispielsweise schon als hartentschiedene Symbole vor, d.h. beispielsweise als Bitwerte von 0 oder 1. Jede der Redundanzdaten 16, 24 und 26 ermöglicht das Erkennen und ggf. Korrigieren von Fehlern in einer Ihnen eigenen Granularität, die von der Definition der Codewörter der einzelnen systematischen Vorwärtsfehlerschutz-Codes abhängt. Wie es im Vorhergehenden beschrieben worden ist, kann es sein, dass die Transportstrompakete die Codewörter des dritten systematischen Vorwärtsfehlerschutz-Codes, die Datenpakete 20, 22 die Codewörter des zweiten systematischen Vorwärtsfehlerschutz-Codes und die Zeilen der Korrekturtabelle 36 plus dem zugeordneten Redundanzwort aus den Redundanzdaten 24 jeweils ein systematisches Codewort des ersten systematischen Vorwärtsfehlerschutz-Codes darstellen. Die Redundanzdaten 16, 24 und 26 definieren alle bestimmte Beziehungen zwischen den Bits der Codewörter, die erfüllt sein müssen, damit kein Fehler in dem jeweiligen Codewort vorliegt, und die ggfs., falls die Anzahl und Position der Fehler bestimmte Kriterien erfüllt, eine Korrektur des jeweiligen Codewortes zulassen. Nachdem der Korrigierer 34 also die ersten Redundanzdaten angewendet hat, kann er einige Abschnitte in der Korrekturtabelle 36 und/oder den Redundanzdaten 24 bereits als fehlerfrei einstufen - entweder weil sie schon fehlerfrei waren oder korrigiert worden sind - und manche Abschnitte als fehlerbehaftet, wobei die Granularität, wie gesagt, von den ersten Redundanzdaten abhängt, d.h. ob es sich um die Redundanzdaten 16, 24 oder 26 handelt. Danach wird für die verbleibenden fehlerhaften Abschnitte die Anwendung einer der anderen Redundanzdaten vorgenommen, um die Menge an Fehlern bzw. die Orte an Fehlern zu verkleinern. Dazu hilft es, dass die Granularität der Korrekturmöglichkeiten der unterschiedlichen Redundanzdaten zueinander unterschiedlich ist. Vor allem kann es auch hilfreich sein, dass - wie es gemäß dem vorliegenden Ausführungsbeispiel der Fall ist - die Granularitätseinheitsabschnitte der Redundanzdaten 24 bezogen auf die Anordnung in der Korrekturtabelle 36 quer zu den Granularitätseinheitsabschnitten der anderen Redundanzdaten 26 und 16 verlaufen. Wenn dann nach der ersten Runde der Korrigierer 34 wieder die ersten Redundanzdaten anwendet, sind einige übrig gebliebene Fehler der ersten Anwendung dieser Redundanzdaten bereits durch die Anwendung der anderen Redundanzdaten korrigiert worden, und es besteht aufgrund dieser rekursiven Anwendung die Möglichkeit, dass die Anwendung genau eben dieser ersten Redundanzdaten wieder weitere aktuell verbleibende Fehler korrigieren kann, weil andere damals übrig gebliebene Fehler durch die anderen Redundanzdaten zwischenzeitlich korrigiert worden sind. Auf diese Weise korrigiert der Korrigierer 34 effektiv Fehler in den am Eingang 12 ankommenden Daten und vor allem in den Nutzdaten 28 der Datenpakete 20, 22.

Der Korrigierer 34 kann demnach, wie es in Fig. 1 angedeutet ist, drei Redundanzdatenanwender 34a, 34b und 34c aufweisen, wovon der erste ausgebildet sein kann, um die Redundanzdaten 24 des ersten systematischen Vorwärtsfehlerschutz-Codes auf die Datenpakete 20, 22 anzuwenden, um Fehler in den Datenpaketen zu korrigieren und verbleibende Fehler in den Datenpaketen zu markieren, der zweite ausgebildet ist, um die Redundanzdaten 26 des zweiten systematischen Vorwärtsfehlerschutz-Codes auf die Nutzdaten 28 der Datenpakete 20, 22 anzuwenden, um Fehler in den Nutzdaten 28 der Datenpakete zu korrigieren und verbleibende Fehler in den Nutzdaten der Datenpakete zu markieren, und der dritte ausgebildet ist, um die Redundanzdaten 16 des dritten systematischen Vorwärtsfehlerschutz-Codes auf die Datenpakete 20, 22 und die Redundanzdaten 24 des ersten systematischen Vorwärtsfehlerschutz-Codes anzuwenden, um Fehler in den Datenpaketen und Redundanzdaten des ersten systematischen Vorwärtsfehlerschutz-Codes zu korrigieren und verbleibende Fehler darin zu markieren. Mit Ausnahme der letzten Runde sind beispielsweise alle drei Redundanzdatenanwender 34a-34c in jeder Runde aktiv.

Der Korrigierer 34 kann die Korrektur erfolgreich oder erfolglos abbrechen. Der Korrigierer 34 ist beispielsweise ausgebildet, die Korrektur abzubrechen, sobald einer der Redundanzdatenanwender 34a-34c alle verbleibenden Fehler korrigieren konnte. In diesem Fall war der Korrigierer 34 erfolgreich. Der Korrigierer 34 kann aber beispielsweise ebenfalls ausgebildet sein, die Korrektur abzubrechen, sobald hintereinander keiner der Redundanzdatenanwender 34a-34c trotz Versuches nicht in der Lage war, auch nur einen Fehler der verbleibenden Fehler - zumindest bezogen auf die Nutzdaten 28 - zu korrigieren. In diesem Fall war der Korrigierer 34 nicht erfolgreich, und es verblieben Fehler in den Daten am Eingang 12 und vor allem ggf. in den Nutzdaten 28 der Datenpakete 20, 22. Der Korrigierer 34 kann in diesem Fall ausgebildet sein, die Nutzdaten 28 der Korrekturtabelle 36 überhaupt nicht auszugeben, oder aber die Nutzdaten 28 von betroffenen Datenpaketen 20, 22 zu markieren, oder sogar einzeln die fehlerbehafteten Abschnitte zu markieren oder dergleichen.

Wie es im Folgenden noch näher beschrieben wird, kann die Vorrichtung 10 somit ausgebildet sein, die drei Vorwärtsfehlerschutz-Codes dreier unterschiedlicher OSI-Protokollschichten auszuwerten, wobei die Redundanzdaten 16 der niedrigsten Protokollschicht und die Redundanzdaten 26 der höchsten Protokollschichten angehören.

Es wird darauf hingewiesen, dass der soeben beschriebene Vorteil der Möglichkeit der rekursiven Anwendung der Redundanzdaten 16, 24 und 26 durch die systematische Eigenschaft des Vorwärtsfehlerschutz-Codes der Redundanzdaten 24 und 16 ermöglicht wird. Die systematische Eigenschaft des Vorwärtsfehlerschutz-Codes der Redundanzdaten 26 ermöglicht einen für existierende Decodierer, die mit diesen Redundanzdaten 26 nicht rechnen, transparenten Einbau dieser Redundanzdaten in die Datenstruktur der Datenpakete 20, 22. Wie es im Folgenden noch näher beschrieben werden wird, ist es möglich, dass die Redundanzdaten 26 des zweiten systematischen Vorwärtsfehlerschutz-Codes in Headem (nicht gezeigt in Fig. 1) der Datenpakete 20, 22 überspringbar eingebettet sind, indem in den Headern der Datenpakete 20, 22 eine eine Länge der in den Datenpaketen enthaltenen Redundanzdaten des zweiten systematischen Vorwärtsfehlerschutz-Codes anzeigende Längenangabe enthalten ist, die es einem syntaktischen Analysierer an einem solchen älteren Decodierer ermöglicht, die Header der Datenpakete syntaktisch zu analysieren und dabei die Längenangabe in den Datenpaketen auszuwerten, um die syntaktische Analyse in einem Anschluss an die Redundanzdaten des zweiten systematischen Vorwärtsfehlerschutz-Codes fortzuführen. In anderen Worten ausgedrückt, sind solche älteren Decodierer in der Lage, die Redundanzdaten 26 des zweiten systematischen Vorwärtsfehlerschutz-Codes zu überspringen. In dem exemplarischen Fall von Fig. 1 besitzt bereits der Korrigierer 34 die Fähigkeit, die Datenpakete insofern syntaktisch zu analysieren, als er die Position der Redundanzdaten 26 in den Datenpaketen erkennt. Der Korrigierer 34 besitzt also insofern beispielsweise die Fähigkeit, eine Längenangabe in den Datenpaketen 20, 22 auszuwerten, um nur die Nutzdaten 28 der Datenpakete am Ausgang 30 auszugeben, die auch lediglich von einem älteren Decodierer ausgewertet worden wären. Eine sich an den Ausgang 30 anschließende Verarbeitungseinheit, die in Fig. 1 allerdings nicht gezeigt ist, könnte einen syntaktischen Analysierer zum syntaktischen Analysieren aufweisen, der dazu ausgebildet wäre, den Rest der Header der Datenpakete auszuwerten, d. h. u.a. die Analyse in demjenigen Teil der Nutzdaten 28 fortzusetzen, die auf die Stelle folgen, an denen die Redundanzdaten in die Datenpakete eingefügt waren.

Die obige Beschreibung umfasste somit u.a. auch ein Empfangsverfahren auf Ebene der Transport- und Vermittlungs-Schicht gemäß der OSI-Protokollschichteinteilung zum Empfang von IP-Daten, die mittels eines Einkapselungsverfahrens mit Vorwärtsfehlerschutz übertragen werden. Das Verfahren ermöglicht, Fehler zu korrigieren, die mit den bisher bekannten und standardisierten Verfahren nicht mehr restaurierbar wären. Als Einkapselungsverfahren ist unter anderem, aber nicht ausschließlich MPE in Verbindung mit einem Vorwärtsfehlerschutz-Verfahren möglich. Als Vorwärtsfehlerschutz-Verfahren kommen z. B. MPE-FEC und MPE-IFEC der Standards DVB-H und DVB-SH in Frage. Dieses somit auch beschriebene Protokollschicht-übergreifende Verfahren erweitert die in der Beschreibungseinleitung beschriebenen Standards und stellt ein rekursives Fehlerkorrekturverfahren vor, das zusätzliche Fehlerschutzdaten überträgt und bisher an dieser Stelle nicht benutzte Fehlerschutzdaten hinzunimmt und damit die Möglichkeiten bestehender hierarchischer Decodierung verbessert. Obwohl der gesendete Bitstrom gegenüber den in der Beschreibungseinleitung der vorliegenden Anmeldung beschriebenen Standards verändert wird, bleibt eine Kompatibilität mit dafür nicht vorbereiteten Empfangsgeräten erhaltbar. Zur Benutzung sind Erweiterungen sowohl auf der Senderseite zur Verfügbarmachung als auch auf der Empfängerseite zur Vorteilsnutzung zu implementieren, wie es im Vorhergehenden exemplarisch beschrieben worden ist.

Unter anderem wurde somit im Vorhergehenden auch ein Verfahren beschrieben, bei dem Fehlerschutzdaten verschiedener Protokollschichten in Verbindung mit der Neueinbringung eines an sich ggf. schwach ausgeprägten zusätzlichen Fehlerschutz-Codes, samt nämlich dem zweiten Vorwärtsfehlerschutz-Code, gemeinsam genutzt werden, wodurch die Korrekturfähigkeit eines Empfangssystems insgesamt verbessert wird. Wie es im Vorhergehenden beschrieben worden ist, ist es möglich, zusätzlich in den Datenstrom IP-Header-Optionen einzufügen, die einen weiteren Vorwärtsfehlerschutz-Code (FEC) tragen, d. h. die Redundanzdaten 26. Der zusätzliche Fehlerschutz auf IP-Ebene kann durch eine entsprechende Instanz auf der Sendeseite eingefügt werden. Dies kann so geschehen, dass bisherige Empfänger den Datenstrom weiterhin ungehindert decodieren können, also konform zu der vorgesehenen Erweiterungsmöglichkeit für Paket-Header des Internet-Protokolls (IP). Eine entsprechende Komponente auf Senderseite nimmt (1) für den Versand bestimmte IP-Pakete entgegen, (2) berechnet auf den Paketdaten basierend den Fehlerschutz (3), erweitert die Pakete mit der unten beschriebenen IP-Header-Option und (4) führt die veränderten Pakete wieder dem Sendeweg zu.

Mit dem Begriff "rekursiver Fehlerschutz" wird gemäß der vorliegenden Anmeldung ein mehrdimensionaler Fehlerschutz auf einem gemeinsamen Datenblock bezeichnet, dessen Decodierung rekursiv stattfindet. Der gemeinsame Datenblock stellt in dem exemplarischen Fall von Fig. 1 die Summe der Nutzdaten 28 dar, die in der Korrekturtabelle 36 enthalten sind. Als Mehrdimensionalität tritt die Benutzung von verschiedenen der oben genannten Fehlerschutz-Strukturen auf. Die von diesen Strukturen geschützten Daten überlappen einander und können identisch sein. Der gemeinsame Datenblock kann auch so aufgefasst werden, dass er die Nutzdaten, den neu eingebrachten Fehlerschutz, d. h. die Redundanzdaten 26, sowie einen oder mehrere der bisher im entsprechenden Protokollstapel befindlichen Vorwärtsfehlerschutz-Codes umfasst, d. h. die Redundanzdaten 16 und 24.

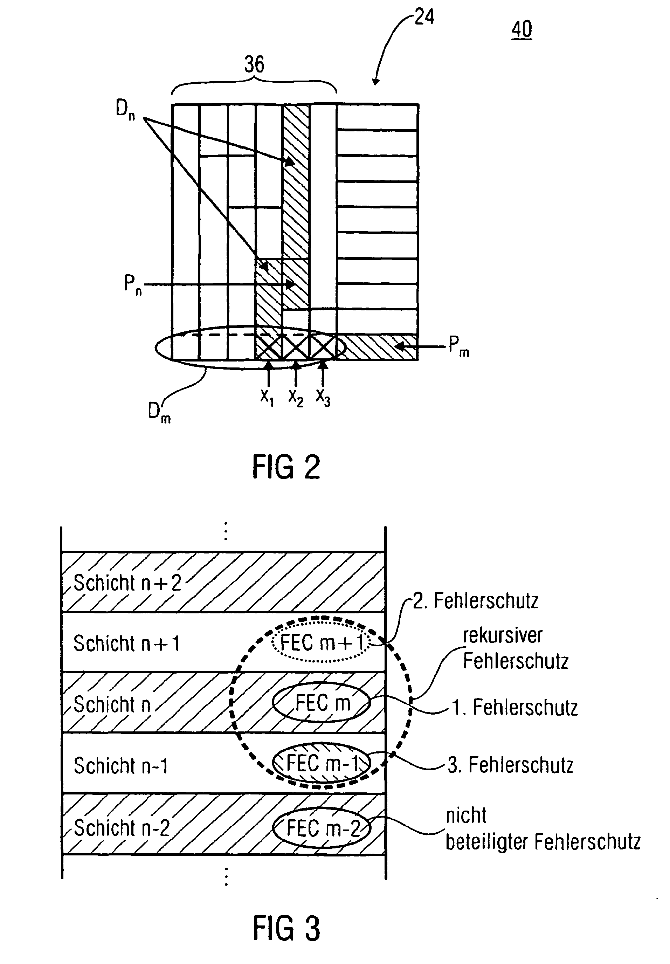

Jede Fehlerschutz-Struktur kann eine Ausprägung eines Fehlerschutz-Verfahrens in einem Protokoll darstellen. Die Rekursion erstreckt sich in diesem Fall über mindestens zwei verwendete Fehlerschutz-Strukturen und damit ggf. auch über mehrere Protokollschichten. Die Überdeckung mehrerer Protokollschichten ist in Fig. 3 veranschaulicht, in welcher die FEC-Daten FEC m des ersten Fehlerschutzes dem ersten systematischen Vorwärtsfehlerschutz-Code aus Fig. 1, die Redundanzdaten FEC m+1 des zweiten Fehlerschutzes dem zweiten systematischen Vorwärtsfehlerschutz-Code aus Fig. 1, und die Redundanzdaten FEC m-1 des dritten Fehlerschutzes den Redundanzdaten 16 des dritten systematischen Vorwärtsfehlerschutz-Codes aus Fig. 1 entsprechen.

Die oben beschriebene Decodierung wird relevant, wenn ein oder mehrere beteiligte Fehlerschutz-Verfahren ihre Nutzdaten allein nicht mehr rekonstruieren können. In diesem Fall ist durch Anwendung des rekursiven Fehlerschutzes in bestimmten Fällen dennoch eine Korrektur möglich: Durch die teilweise Korrektur von Daten durch den einen (beliebigen) Fehlerschutz wird die vorher nicht gegebene Korrekturfähigkeit eines der anderen (beliebigen) Fehlerschutz-Verfahren wieder ermöglicht. Solange die beteiligten Einzelverfahren für sich ihre Nutzdaten vollständig darstellen bzw. restaurieren können, ist eine Anwendung des rekursiven Fehlerschutzes nicht nötig.

Die Rekursion geschieht durch eine Komponente auf der Empfangsseite. In dem Fall von Fig. 1 war dies der Korrigierer 34. Insbesondere kann die Rekursion folgendermaßen stattfinden, wie es oben exemplarisch auch beschrieben worden ist, nämlich: (1) Sobald eines der beteiligten Fehlerschutz-Verfahren die von ihm geschützten Daten nicht vollständig korrigieren kann, wird (2) im Turnus ein weiteres Fehlerschutz-Verfahren konsultiert, um die Korrektur der Daten fortzusetzen. Dabei kann das neu konsultierte Verfahren zum ersten Mal aufgerufen werden oder erneut aktiv werden, falls es beim Codieren vorher bereits als Teil einer (nach ISO-OSI-Orientierung) tieferliegenden Protokollschicht aktiv war. In einem solchen Fall kann die Rekursion auch erst in einer Protokollschicht gestartet werden, die höher liegt, als die niedrigste Protokollschicht, die eines der beteiligten Fehlerschutz-Verfahren kapselt. (3) Ist nach einer Runde über alle beteiligten Verfahren seit Beginn der Rekursion keine vollständige Korrektur erfolgt, kann dennoch die Rekursion fortgesetzt werden. (4) Abbruchbedingung im Fehlerfall kann somit beispielsweise erst dann vorliegen, wenn eine Runde ohne Korrekturaktivität auch nur eines der beteiligten Fehlerschutz-Verfahren erfolgte. (5) Eine Abbruchbedingung für den Korrekturfall kann gegeben sein, wenn eines der beteiligten Verfahren meldet, dass von diesem alle Daten bis zur Vollständigkeit korrigiert wurden.

Fig. 2 stellt noch einmal exemplarisch detaillierter einen möglichen Aufbau der Korrekturtabelle 36 dar, die gemäß dem Ausführungsbeispiel von Fig. 2 zusammen mit den Redundanzdaten 24 eine Daten-Matrix 40 bildet. Zu sehen sind in Fig. 2 sowohl Felder mit Nutzdaten-Symbolen als auch Felder mit Fehlerschutz-Symbolen. In der Fig. 2 sind nur exemplarisch einzelne Symbole voneinander abgegrenzt dargestellt. Es bezeichnen in Fig. 2 Dₘ die Daten bzw. Nutzdaten-Symbole, welche durch den Fehlerschutz m (vgl. Fig. 3) geschützt sind und Pₘ die entsprechenden Fehlerschutz-Symbole des Fehlerschutzes m, d. h. die Redundanzdaten 24. Analog beziehen sich Dₙ und Pₙ auf den Fehlerschutz n, mit n=m+1, wenn Fig. 2 und 3 verglichen werden. x_{1...3} seien Fehlerstellen, die bei der Übertragung entstanden. Im Beispiel sei nun der Fehlerschutz m zu schwach, um alle Fehlerstellen X_{1...3} korrigieren zu können. Durch die oben beschriebenen Ausführungsbeispiele wird nun Fehlerschutz n konsultiert, der ausreicht, um die Fehlstelle x₁ zu korrigieren. Danach existieren noch die Fehlerstellen x_{2,3}, die nun durch den Fehlerschutz m korrigiert werden können.

Finden solche Schritte nun weiter entsprechend statt, bis weitere Fehlerstellen entsprechend korrigiert wurden, liegt eine tatsächlich rekursive Decodierung vor, wie sie auch im Vorhergehenden Bezug nehmend auf Fig. 1 und dort insbesondere den Korrigierer 34 beschrieben worden ist.

Die obigen Ausführungsbeispiele liefern somit einen Fehlerschutz, der Daten eines IP-Pakets durch Einfügung von Fehlerschutz-Symbolen in beispielsweise den IP-Header mit Hilfe einer Header-Option schützen kann. Dieser Fehlerschutz wird im Folgenden als IP-Fehlerschutz (IP-FEC) bezeichnet.

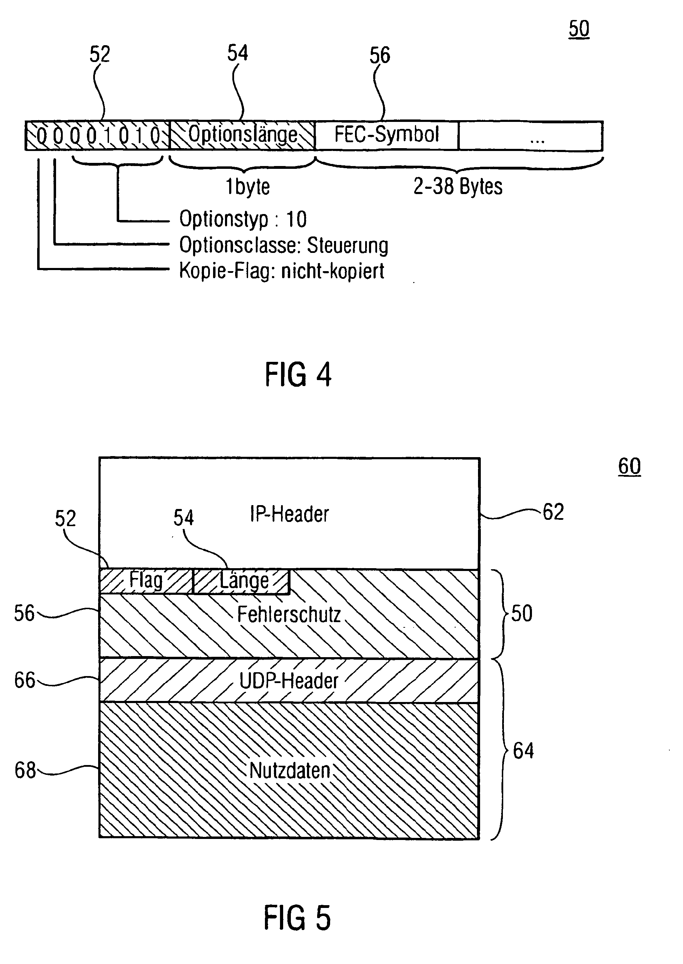

Fig. 4 zeigt ein Ausführungsbeispiel, wonach die vorerwähnten Redundanzdaten 26 exemplarisch in einem Header von IP-Paketen transparent für frühere IP-Datenpaket-Empfänger eingebaut werden, wobei die IP-Datenpakete dem Datenpaket 20, 22 aus Fig. 1 entsprechen könnten. Fig. 4 stellt insbesondere eine Möglichkeit einer spezifizierten IP-Header-Option dar, wobei Fig. 5 deren Einbettung in ein IP-Paket zeigt. In anderen Worten ausgedrückt, zeigt Fig. 4 einen Ausschnitt bzw. eine Erweiterung 50 eines IP-Headers, und Fig. 5 ein Ausführungsbeispiel für ein derart erweitertes IP-Paket 60. Die IP-Erweiterung 50 umfasst eine entsprechende Typ-Angabe bzw. ein entsprechendes Flag für die entsprechende FEC-Erweiterung 50, nämlich ein Byte 52, gefolgt von einer Längenangabe 54 und dem eigentlichen FEC-Symbol 56, das in Fig. 1 dem Bezugszeichen 26 entspricht, wobei die Optionslänge 54 von der Länge des FEC-Symbols 56 abhängt bzw. sie unmittelbar oder mittelbar, damit ein Empfänger, der den Optionstyp 52 nicht kennt, an das Ende der Erweiterung 50 springen kann, um diese taktische Analyse fortzusetzen. Beispielsweise gibt die Optionslänge die Länge der gesamten Option explizit an, d.h. die Länge des FEC-Symbols 56 plus 2 Bytes, und damit aber auch mittelbar eindeutig auch die Länge des FEC-Symbols 56. Lediglich der Vollständigkeit halber sei erwähnt, dass in dem IP-Header 62 auch eine IP-Header-Länge angegeben sein kann, die es Empfängern auch ermöglicht, solgleich die syntaktische Analyse bei den Nutzdaten 64 zu Beginnen, wenn sich dieselben nämlich generell nicht for die Optionsangaben interessieren.

Wie es in Fig. 5 gezeigt ist, kann die Erweiterung 50 zwischen dem eigentlichen IP-Header 62 des IP-Pakets 60 und den Nutzdaten 64 des IP-Pakets 60 angeordnet sein, wobei die Nutzdaten 64 wiederum gemäß einem Ausführungsbeispiel einen UDP-Header 66 aufweisen können, der von entsprechenden Nutzdaten 68 gefolgt wird. Bevorzugterweise bilden die Redundanzdaten 56 zusammen mit allen anderen Daten des IP-Pakets 60 ein entsprechendes systematisches Codewort. Alternativ kann das Codewort lediglich durch die Komponenten 56 und 64 gebildet werden oder dergleichen.

Fig. 4 zeigt noch etwas detaillierter, wie die Eckdaten bezüglich der Redundanzdaten-Option gemäß einem Ausführungsbeispiel festgelegt sein können.

Das Kopie-Flag des Bytes 52 wird auf nicht-kopiert eingestellt. Die Redundanzdaten-Option wird somit bei Fragmentierung nicht kopiert. Eine Fragmentierung ist beim Fehlerschutz auf Ebene der Internetschicht ohnehin nicht wünschenswert.

Das Optionsklasse-Bit wird auf "Steuerung" eingestellt. Die Redundanzdaten-Erweiterung 50 passt nicht direkt in einen der bisher existierenden zwei Bereiche aus den IP-Optionen, fällt aber mehr in den Bereich "Steuerung" bzw. "Control" als in "Debugging und Messung".

Die darauf folgende Optionsnummer ist in Fig. 4 exemplarisch auf ID 10 eingestellt, da diese Optionsnummer noch nicht vergeben ist.

Nach den beiden obligatorischen Feldern "Option-Typ" und "Optionslänge" folgen, wie es in Fig. 4 gezeigt ist, die Fehlerschutz-Daten 56. Die Fehlerschutz-Daten aus der IP-Header-Option können, wie es im Vorhergehenden erörtert worden ist, sowohl ihr vorangehende Symbole, nämlich die Symbole in den Bereichen 52, 56 und 62, als auch die ihr folgenden Symbole, nämlich Symbole in den Bereichen 66 und 68, schützen, die von der IP-Nachricht 60 bedeckt werden, in der die IP-Header-Option 50 selbst enthalten ist. Gemäß dem IP-Protokoll ist dabei eine Länge für den Fehlerschutz 56 von 1 bis 38 Byte möglich. Der Einsatz eines systematischen Fehlerschutz-Codes, wie er gemäß den Ausführungsbeispielen vorgeschlagen wird, kann insbesondere auch die Verwendung eines Block-Codes vorsehen, wie z. B. einen Reed-Solomon-Code als dem zweiten systematischen Vorwärtsfehlerschutz-Code von Fig. 1. Wegen der Beschaffenheit eines Block-Codes muss die maximale Nutzdatenlänge nach oben begrenzt werden. Ungenutzter Nutzdatenbereich muss aber nicht etwa übertragen werden, sondern kann auf Empfangsseite, wie z. B. durch den Korrigierer 34, bezüglich des Block-Codes mit einem vorbekannten Wert, wie z. B. mit Nullen, vervollständigt werden. Anders ausgedrückt kann der Korrigierer 34 bei der Anwendung der Fehlerschutz-Daten 56 zur Bildung des zu korrigierenden Codewortes das IP-Paket 60 mit variabler Länge auf die durch den systematischen Vorwärtsfehlerschutz-Code definierte Länge auf vordefinierte Weise verlängern, nämlich wie z. B. durch das Einfügen von Nullen.

Der zusätzliche Fehlerschutz des zweiten Vorwärtsfehlerschutz-Codes kann schwach sein, entfaltet seinen Nutzen jedoch im Zusammenspiel mit der rekursiven Decodierung, wie sie im Vorhergehenden beschrieben worden ist. Zusammen mit dieser ist ein verbesserter Gesamtfehlerschutz auf Ebene des Link-Layers erzielbar.

Im Folgenden werden Ausführungsbeispiele der vorliegenden Erfindung, wie sie im Vorhergehenden beschrieben worden ist, noch am Beispiel des DVB-H-Standards erläutert. Bei DVB-H erfolgt der Empfang von IP-Paketen durch Multi-Protocol-Encapsulation (MPE; MPE = Multiprotokoll-Einkapselung) mit Vorwärtsfehlerschutz (MPE-FEC). Die Übertragung der Transportstrom-Pakete erfolgt geschützt durch einen Reed-Solomon-Fehlerschutz auf Transportstrom-Ebene (MPEG-TS). Der zur Korrektur gemeinsam genutzte Datenblock umfasst genau einen MPE-FEC-Rahmen 36+24 bzw. 40 zuzüglich der Fehlerschutz-Daten 16 der Transportstrom-Ebene. Praktikabel ist die Verwendung eben dieser gesamten zur Verfügung stehenden Länge der IP-Header-Option. Somit erreicht der IP- Fehlerschutz bei der in [3] angenommenen IP-Paketlänge eine Fehlerschutz-Rate von knapp 4 %. Als der Vorwärtsfehlerschutz-Code der Redundanzdaten 26 kann ein Reed-Solomon-Code der Parametrierung RS(n,n-38) benutzt werden, wobei die maximale Paketgröße als Möglichkeit wie ebenda auf n= 1000 oder n =1038 begrenzt sein kann.

Die Code-Rate und Existenz eines zusätzlich übertragenen Fehlerschutzes, d. h. der Redundanzdaten 26, kann analog zur Signalisierung eines Fehlerschutzes auf Ebene der Multi-Protocol-Encapsulation (MPE) im PSI/SI signalisiert werden. Eine Signalisierung ist sinnvoll, damit die Code-Rate zur Laufzeit parametriert und an die Bedürfnisse der jeweiligen Applikation angepasst werden kann. Aufgrund des bereits durch DVB-SH erweiterten MPE-FEC-Timeslice-Descriptors, der zur Signalisierung der Parameter f[r MPE-FEC genutzt wird, sollte bei einer Signalisierung in diesem Descriptor zugunsten der Kompatibilität mit DVB-SH und zukünftigen Verfahren Abstand genommen werden. Ein neu zu entwerfender Descriptor könnte so bei verschiedenen Übertragungsverfahren unverändert zum Einsatz kommen. Folgende Daten könnten enthalten sein, nämlich die Referenz auf dem betreffenden MPE-Datenstrom, eine Fehlerschutz-Länge und eine Block-Länge des Fehlerschutzes.

Insbesondere können für die oben beschriebenen Ausführungsbeispiele einer rekursiven Decodierung folgende Verfahren verwendet werden:

Für den zusätzlich eingebrachten Vorwärtsfehlerschutz auf IP-Ebene IP-FEC bzw. den zweiten systematischen Vorwärtsfehlerschutz-Code, zu dem die Redundanzdaten 26 gehören, könnte ein RS(1038,1000) verwendet werden. Für den Fehlerschutz auf Ebene der Multi-Protocol-Encapsulation (MPE) bzw. für den ersten systematischen Vorwärtsfehlerschutz-Code könnte der Fehlerschutz-Code RS(255,191) verwendet werden, nämlich zeilenweise innerhalb der Tabelle 36. Für den Fehlerschutz der Transportstrom-Pakete, d. h. Transportstrom-Paket-FEC bzw. den dritten systematischen Vorwärtsfehlerschutz-Code, zu denen die Redundanzdaten 16 gehören, könnte ein Reed-Solomon-Code mit den Parametern RS(204,188) verwendet werden.

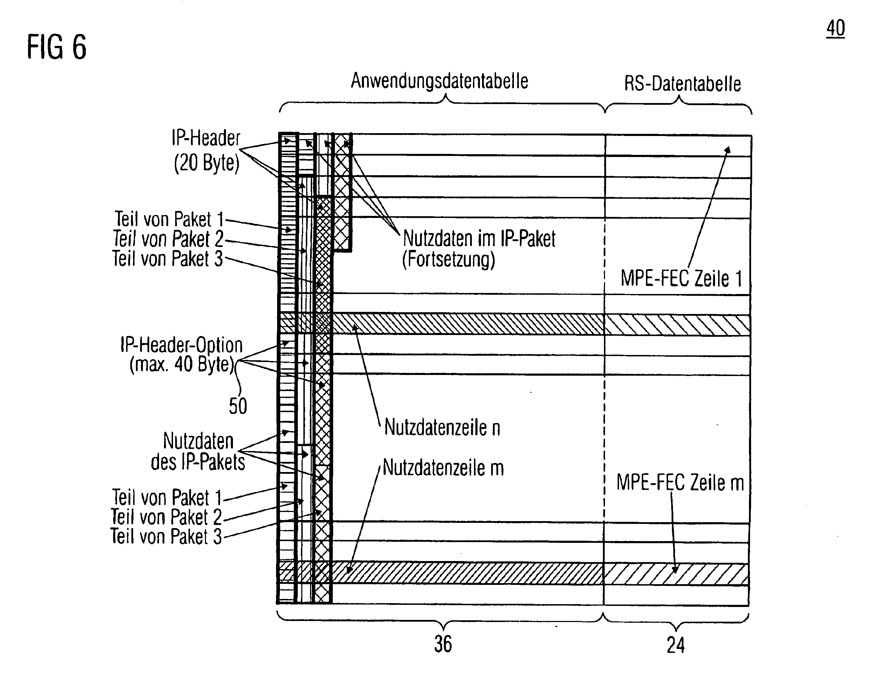

Fig. 6 zeigt am Beispiel des Fehlerschutz-Verfahrens MPE-FEC aus dem Standard DVB-H und den im Vorhergehenden beschriebenen Ausführungsbeispielen einen Fehlerschutz auf IP-Ebene eine Korrektur-Matrix 40, an der das Zusammenspiel der Fehlerschutz-Verfahren bezüglich der Rekursion deutlich wird: Sind Nutzdatenzeilen zu stark mit Fehlern behaftet, können diese teilweise durch den spaltenartigen Fehlerschutz 50 auf den IP-Paketen korrigiert werden. Danach kann ggf. der zeilenorientierte MPE-Fehlerschutz mittels der Redundanzdaten 24 wieder aktiv werden. Im Bild nicht sichtbar ist der oben erwähnte Transportstrom-Paket-Fehlerschutz, da dessen Fehlerschutz-Symbole in der dargestellten Anwendungsdatentabelle (ADT) nicht mehr auftauchen. Jedoch wird auch dieser Fehlerschutz mitbenutzt, und er korrigiert dann wie der IP-Fehlerschutz spaltenartig.

Die oben beschriebenen Ausführungsbeispiele sind direkt übertragbar auf den Standard-DVB-SH. Anstelle des Fehlerschutzes MPE-FEC kommt dabei allerdings der Fehlerschutz MPE-IFEC zum Einsatz. Die Rekursion ist darauf analog anwendbar.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Abkürzungsverzeichnis

- ADST: Application Data Sub Table, Analogon zur ADT bei MPE-IFEC
- ADT: Application Data Table, Daten-Matrix in der die Fehlerkorrektur bei MPE-FEC statt findet
- DVB: Digitial Video Broadcasting, Standard-Familie zur Übertragung von Rundfunk-Inhalten
- DVB-H: DVB for Handheld, DVB-Teilstandard für terrestrische Übertragung zu mobilen Endgeräten.
- DVB-SH: DVB for Satellite Handheld, DVB-Teilstandard für satellitengestützte und hybride (sat./terr.) Übertragung zu mobilen Endgeräten.
- FEC: Forward Error Correction, Vorwärtsfehlerschutz
- IP: Internet Protocol, Das Vermittlungsschicht-Protokoll des Internet
- IPDC: Internet Protocol Data Cast, Übertragung von zumeist multimedialen Datenströmen unter Zuhilfenahme von Internet-Protokollen
- ISO: International Organization for Standardization
- MPE: Multi-Protocol Encapsulation
- MPE-FEC: Standardisierter Fehlerschutz bei DVB-H auf Basis von MPE mit einem Reed-Solomon FEC
- MPE-IFEC: MPE-Interleaved-FEC, standardisierter Fehlerschutz bei DVB-SH auf Basis von MPE mit einem Reed-Solomon FEC (alternativ Raptor-Code) mit zusätzlichen Interleaving auf der Fehlerschutzebene über mehrere Bursts verteilt
- MPEG-TS: Motion Picture Experts Group Transport Stream, Transportstrom gemäß ISO/IEC 13818-1 also die Abfolge der gesendeten TSP, auch bezeichnet als MPEG-2 TS
- Multicast: Versand einer Internet-Nachricht an mehrere Empfänger; im Gegensatz zum Broadcast wird dabei die Nachricht nur an Netze weitergegeben, in denen sich Empfänger für diese Nachricht befinden.
- OSI: Open Systems Interconnection (Reference Model)
- PSI/SI: Program Specific Information/Service Information, Zusatzdaten zur Signalisierung bei DVB
- TEI: Transport Error Indicator
- TSP: MPEG-2 Transportstrom Paket
- TSS: MPEG-2 Transportstrom Sektion
- UDP: User Datagram Protocol, Teil des Internet-Protokolls zur paketorientierten Datenübertragung (Transportschicht)

### Literatur

[1] Standard ISO/IEC 13818-1; 12 2000. Information technology - Generic coding of moving pictures and associated audio information: Systems. http://www.iso.org/
[2] Standard ETSI EN 302 304; 11 2004. Digital Video Broadcasting (DVB); Transmission System for Handheld Terminals (DVB-H). http://www.etsi.org/
[3] Standard ETSI EN 301 192; 04 2008. Digital Video Broadcasting (DVB); DVB specification for data broadcasting. http://www.etsi.org/
[4] Digital Video Broadcasting Project (DVB) (Hrsg.): IP Datacast over DVB H: Content Delivery Protocols (CDP). Digital Video Broadcasting Project (DVB), 12 2005. (DVB Bluebook A101). http://www.dvb.org/
[5] Digital Video Broadcasting Project (DVB) (Hrsg.): DVB-H Implementation Guidelines. Digital Video Broadcasting Project (DVB), 05 2007. (DVB Bluebook A092r2). http://www.dvb.org/
[6] Digital Video Broadcasting Project (DVB) (Hrsg.): DVB-SH Implementation Guidelines. Digital Video Broadcasting Project (DVB), 05 2008. (DVB Bluebook A120). http://www.dvb.org/
[7] Internet Engineering Task Force (Hrsg.): Internet Protocol -DARPA Inernet Programm, Protocol Specification. Internet Engineering Task Force, September1981. (RFC 791) . http://tools.ietf.org/html/rfc791
[8] Koppelaar, A. G. C. ; Eerenberg, O. ; Tolhuizen, L. M. G. M. ; Aue, V.: Restoration of IP-datagrams in the DVB-H link-layer for TV on mobile. In: Proc. Digest of Technical Papers. International Conference on Consumer Electronics ICCE '06, 2006, S. 409-410
[9] Paavola, J. ; Himmanen, H. ; Jokela, T. ; Poikonen, J. ; Ipatov, V.: The Performance Analysis of MPE-FEC Decoding Methods at the DVB-H Link Layer for Efficient IP Packet Retrieval. In: IEEE Transactions on Broadcasting 53 (2007), March, S. 263-275. http://dx.doi.org/10.1109/TBC.2007.891694.- DOI 10.1109/TBC.2007.891694
[10] Schulzrinne,Henning; Casner,StephenL. ; Frederick,Ron ; Jacobson,Van: RTP: A Transport Protocol for Real-Time Applications, July 2003. (RFC 3550). http://tools.ietf.org/html/rfc3550
[11] Vadakital, Vinod Kumar M. ; Hannuksela, Miska M. ; Razaei, Mehdi ; Gabbouj, Moncef: Optimal IP Packet Size for Efficient Data Transmission in DVB-H. In: IEEE NORSIG -(2006), S. 82-85

## Patentansprüche

1. Vorrichtung zur Decodierung eines paketbasierten Transportstroms (14), der mit einem ersten systematischen Vorwärtsfehlerschutz-Code geschützte und eingekapselte Datenpakete (20, 22) und Redundanzdaten (24) des ersten systematischen Vorwärtsfehlerschutz-Codes transportiert, mit
einem Interleaver (32) zum Füllen einer Korrekturtabelle (36) mit den Datenpaketen (20, 22) und den Redundanzdaten (24) des ersten systematischen Vorwärtsfehlerschutz-Codes aus Nutzdatenabschnitten (18) von Transportstrompaketen (14a-14e) des paketbasierten Transportstroms (14), wobei die Redundanzdaten des ersten systematischen Vorwärtsfehlerschutz-Codes die Datenpakete (20, 22) schützen, mit denen die Korrekturtabelle gefüllt wird; und
einem Korrigierer (34) zum Korrigieren eines Fehlers in den Datenpaketen, mit denen die Korrekturtabelle gefüllt ist, durch, in Runden, rekursives Auswerten der Redundanzdaten (24) des ersten systematischen Vorwärtsfehlerschutz-Codes, **dadurch gekennzeichnet, dass**
Redundanzdaten (26) eines zweiten systematischen Vorwärtsfehlerschutz-Codes, die in jedem Datenpaket enthalten sind und Nutzdaten (28) in dem jeweiligen Datenpaket schützen, und Redundanzdaten (16) eines dritten systematischen Vorwärtsfehlerschutz-Codes, die die Nutzdatenabschnitte (18) in den Transportstrompaketen schützen, vorhanden sind, und dass
der Korrigierer (34) ausgebildet ist, um bei der Korrektur, in einer Runde der rekursiven Auswertung, die Redundanzdaten des ersten, zweiten und dritten systematischen Vorwärtsfehlerschutz-Codesauszuwerten.

2. Vorrichtung gemäß Anspruch 1, bei der eine maximale Paketgröße der Datenpakete (20, 22) kleiner als eine Größe der Korrekturtabelle ist, und eine maximale Paketgröße der Transportstrompakete (14a-14e) kleiner als eine Größe der Korrekturtabelle (36) ist.

3. Vorrichtung gemäß Anspruch 1 oder 2, bei der die Datenpakete IP-Pakete sind.

4. Vorrichtung gemäß einem der Ansprüche 1 bis 3, bei der jedes Transportstrompaket einen Nutzdatenabschnitt und ein zugeordnetes Redundanzdatenwort (16) aufweist, die zusammen ein systematisches Codewort des dritten systematischen Vorwärtsfehlerschutz-Codes bilden.

5. Vorrichtung gemäß einem der Ansprüche 1 bis 4, bei der die Transportstrompakete MPEG-TS-Pakete sind.

6. Vorrichtung gemäß einem der Ansprüche 1 bis 5, bei der der erste systematische Vorwärtsfehlerschutz-Code ein MPE-FEC-Code ist.

7. Vorrichtung gemäß einem der Ansprüche 1 bis 6, bei der der Interleaver (32) ausgebildet ist, um die Korrekturtabelle (36) spaltenweise mit den Datenpaketen (20, 22) zu füllen, wobei die Redundanzdaten (24) des ersten systematischen Vorwärtsfehlerschutz-Codes ein Redundanzwort pro Zeile der Korrekturtabelle (36) aufweisen, und jedes Redundanzwort der Redundanzdaten (24) des ersten systematischen Vorwärtsfehlerschutz-Codes zusammen mit einem Ausschnitt der Datenpakete in der jeweiligen Zeile der Korrekturtabelle ein systematisches Codewort des ersten systematischen Vorwärtsfehlerschutz-Codes bildet.

8. Vorrichtung gemäß einem der Ansprüche 1 bis 7, bei der jedes Datenpaket ein Redundanzdatenwort aufweist, das zusammen mit einem disjunkten Rest des jeweiligen Datenpaketes - erweitert um vorbestimmte Füllbits auf eine vorbestimme konstante Länge - ein systematisches Codewort des zweiten systematischen Vorwärtsfehlerschutz-Codes bildet.

9. Vorrichtung gemäß einem der Ansprüche 1 bis 8, bei der der Korrigierer (34) ausgebildet ist, um während des rekursiven Auswertens zu protokollieren, welche Teile der Korrekturtabelle bereits als fehlerfrei identifiziert wurden, wobei ein verbleibender Teil der Korrekturtabelle einen zu korrigierenden Teil darstellt.

10. Vorrichtung gemäß einem der Ansprüche 1 bis 9, bei der der Korrigierer (34) ausgebildet ist, um zunächst in einer ersten Runde die Redundanzdaten eines vorbestimmten ersten des ersten bis dritten systematischen Vorwärtsfehlerschutz-Codes auszuwerten, um die Datenpakete als fehlerfrei zu identifizieren oder, falls ein Fehler in denselben erkannt wird, dieselben, soweit möglich, zu korrigieren und, soweit nicht möglich, als fehlerbehaftet zu identifizieren, um einen ersten fehlerbehafteten Anteil der Datenpakete zu erhalten, und, falls bei der Auswertung der Redundanzdaten des vorbestimmten ersten des ersten bis dritten systematischen Vorwärtsfehlerschutz-Codes ein Fehler erkannt wird und eine vollständige Korrektur nicht möglich ist, die Redundanzdaten der zu dem vorbestimmten ersten unterschiedlichen der ersten bis dritten systematischen Vorwärtsfehlerschutz-Codes auszuwerten, um Fehler in dem ersten fehlerbehafteten Anteil der Datenpakete zu korrigieren, um eine echte Teilmenge des ersten fehlerbehafteten Anteils als einen zweiten fehlerbehafteten Anteil zu erhalten, und Fehler in dem zweiten fehlerbehafteten Anteil in einer auf die erste Runde folgenden Runde zu korrigieren.

11. Vorrichtung gemäß einem der Ansprüche 1 bis 10, bei der der systematische erste bis dritte Vorwärtsfehlerschutz-Code zu unterschiedlichen OSI-Protokollschichten gehören.

12. Vorrichtung gemäß einem der Ansprüche 1 bis 11, bei der der Korrigierer (34) folgende Merkmale aufweist:
einen ersten Redundanzdatenanwender (34a) zum Anwenden der Redundanzdaten (24) des ersten systematischen Vorwärtsfehlerschutz-Codes auf die Datenpakete (20, 22), um Fehler in den Datenpaketen zu korrigieren und verbleibende Fehler in den Datenpaketen zu markieren;
einen zweiten Redundanzdatenanwender (34b) zum Anwenden der Redundanzdaten (26) des zweiten systematischen Vorwärtsfehlerschutz-Codes auf die Nutzdaten der Datenpakete, um Fehler in den Nutzdaten der Datenpakete zu korrigieren und verbleibende Fehler in den Nutzdaten der Datenpakete zu markieren; und
einen dritten Redundanzdatenanwender (34c) zum Anwenden der Redundanzdaten (16) des dritten systematischen Vorwärtsfehlerschutz-Codes auf die Datenpakete (20, 22) und Redundanzdaten des ersten systematischen Vorwärtsfehlerschutz-Codes, um Fehler in den Datenpaketen und Redundanzdaten des ersten systematischen Vorwärtsfehlerschutz-Codes zu korrigieren und verbleibende Fehler in den Datenpaketen und Redundanzdaten des ersten systematischen Vorwärtsfehlerschutz-Codes zu markieren,
wobei jede der drei Redundanzdatenanwender in jeder Runde, mit Ausnahme der letzten Runde, aktiv ist.

13. Vorrichtung gemäß Anspruch 12, bei der der Korrigierer (34) ausgebildet ist, um die Korrektur abzubrechen, wenn in einer Runde alle Redundanzdatenanwender nicht in der Lage sind, einen Fehler zu korrigieren, oder wenn in einer Runde irgendeiner der Redundanzdatenanwender in der Lage war, alle Fehler zu korrigieren.

14. System mit einer Vorrichtung gemäß einem der Ansprüche 1 bis 13, wobei die Redundanzdaten (26) des zweiten systematischen Vorwärtsfehlerschutz-Codes in Headern der Datenpakete überspringbar eingebettet sind, indem in den Headern der Datenpakete eine eine Länge der in den Datenpaketen enthaltenen Redundanzdaten des zweiten systematischen Vorwärtsfehlerschutz-Codes anzeigende Längenangabe enthalten ist, und einem syntaktischen Analysierer zum syntaktischen Analysieren der Header der Datenpakete, die ausgebildet ist, um die Längenangabe in den Datenpaketen auszuwerten, um die syntaktische Analyse in einem Anschluss an die Redundanzdaten des zweiten systematischen Vorwärtsfehlerschutz-Codes fortzuführen.

15. Verfahren zur Decodierung eines paketbasierten Transportstroms, der mit einem ersten systematischen Vorwärtsfehlerschutz-Code geschützte und eingekapselte Datenpakte und Redundanzdaten des ersten systematischen FEC-Codes transportiert, mit
Füllen einer Korrekturtabelle mit den Datenpaketen und den Redundanzdaten des ersten systematischen FEC-Codes aus Nutzdatenabschnitten von Transportstrompaketen des paketbasierten Transportstroms, wobei die Redundanzdaten des ersten systematischen Vorwärtsfehlerschutz-Codes die Datenpakete schützen, mit denen die Korrekturtabelle gefüllt wird; und
Korrigieren eines Fehlers in den Datenpaketen, mit denen die Korrekturtabelle gefüllt ist, durch, in Runden, rekursives Auswerten der Redundanzdaten des ersten systematischen Vorwärtsfehlerschutz-Codes,
**dadurch gekennzeichnet, dass**
Redundanzdaten eines zweiten systematischen Fehlerkorrekturschutz-Codes, die in jedem Datenpaket enthalten sind und Nutzdaten in dem jeweiligen Datenpaket schützen, und Redundanzdaten eines dritten systematischen Vorwärtsfehlerschutz-Codes, die die Nutzdatenabschnitte in den Transportstrompaketen schützen, vorhanden sind, und dass
die Korrektur, in einer Runde der rekursiven Auswertung, die Auswertung der Redundanzdaten des ersten, zweiten und dritten systematischen Vorwärtsfehlerschutz-Codes aufweist.

16. Computerprogramm mit einem Programmcode zur Durchführung des Verfahrens nach Anspruch 15, wenn das Programm auf einem Computer abläuft.

## Claims

1. Apparatus for decoding a packet-based transport stream (14) transporting data packets (20, 22) that are protected by a first systematic forward error protection code and encapsulated, and redundancy data (24) of the first systematic forward error protection code, comprising:
an interleaver (32) for filling a correction table (36) with the data packets (20, 22) and the redundancy data (24) of the first systematic forward error protection code from payload data portions (18) of transport stream packets (14a-14e) of the packet-based transport stream (14), wherein the redundancy data of the first systematic forward error protection code protect the data packets (20, 22) with which the correction table is filled; and
a corrector (34) for correcting an error in the data packets with which the correction table is filled by recursively evaluating the redundancy data (24) of the first systematic forward error protection code in rounds, **characterized in that**
redundancy data (26) of a second systematic forward error protection code included in each data packet and protecting payload data (28) in the respective data packet, and redundancy data (16) of a third systematic forward error protection code protecting the payload data portions (18) in the transport stream packets exist, and that
the corrector (34) is implemented to evaluate, during correction, in a round of recursive evaluation, the redundancy data of the first, second and third systematic forward error protection codes.

2. Apparatus according to claim 1, wherein a maximum packet size of the data packets (20, 22) is smaller than a size of the correction table, and a maximum packet size of the transport stream packets (14a-14e) is smaller than a size of the correction table (36).

3. Apparatus according to claim 1 or 2, wherein the data packets are IP packets.

4. Apparatus according to one of claims 1 to 3, wherein each transport stream packet comprises a payload data portion and an allocated redundancy data word (16), together forming a systematic codeword of the third systematic forward error protection code.

5. Apparatus according to one of claims 1 to 4, wherein the transport stream packets are MPEG-TS packets.

6. Apparatus according to one of claims 1 to 5, wherein the first systematic forward error protection code is an MPE-FEC code.

7. Apparatus according to one of claims 1 to 6, wherein the interleaver (32) is implemented to fill the correction table (36) column by column with the data packets (20, 22), wherein the redundancy data (24) of the first systematic forward error protection code comprise one redundancy word per row of the correction table (36), and each redundancy word of the redundancy data (24) of the first systematic forward error protection code forms, together with a portion of the data packets in the respective row of the correction table, a systematic codeword of the first systematic forward error protection code.

8. Apparatus according to one of claims 1 to 7, wherein each data packet comprises a redundancy data word, which forms, together with a disjoint residual of the respective data packet - extended to a predetermined constant length by predetermined fill bits - a systematic code word of the second systematic forward error protection code.

9. Apparatus according to one of claims 1 to 8, wherein the corrector (34) is implemented to log, during the recursive evaluation, which parts of the correction table have already been identified as being error-free, wherein a remaining part of the correction table represents a part to be corrected.

10. Apparatus according to one of claims 1 to 9, wherein the corrector (34) is implemented to evaluate, at first, in a first round, the redundancy data of a predetermined first of the first to third systematic forward error protection code, and to identify the data packets as error-free, or, if an error is detected within the same, to correct the same as far as possible and, in as far as it is not possible, to identify the same as erroneous to obtain a first erroneous portion of the data packets, and, if during evaluation of the redundancy data of the predetermined first of the first to third systematic forward error protection codes, an error is detected and complete correction is not possible, to evaluate the redundancy data of the predetermined first forward error protection code that differs from the first to third one, to correct errors in the first erroneous portion of the data packets, to obtain a first real subset of the first erroneous portion as a second erroneous portion, and to correct errors in the second erroneous portion in a round following the first round.

11. Apparatus according to one of claims 1 to 10, wherein the systematic first to third forward error protection codes belong to different OSI protocol layers.

12. Apparatus according to one of claims 1 to 11, wherein the corrector (34) comprises:
a first redundancy data applicator (34a) for applying the redundancy data (24) of the first systematic forward error protection code to the data packets (20, 22) to correct errors in the data packets and to mark remaining errors in the data packets;
a second redundancy data applicator (34b) for applying the redundancy data (26) of the second systematic forward error protection code to the payload data of the data packets to correct errors in the payload data of the data packets and to mark remaining errors in the payload data of the data packets; and
a third redundancy data applicator (34c) for applying the redundancy data (16) of the third systematic forward error protection code to the data packets (20, 22) and redundancy data of the first systematic forward error protection code to correct errors in the data packets and redundancy data of the first systematic forward error protection code and to mark remaining errors in the data packets and redundancy data of the first systematic forward error protection code,
wherein each of the three redundancy data applicators is active in each round, with the exception of the last round.

13. Apparatus according to claim 12, wherein the corrector (34) is implemented to terminate the correction when in one round all redundancy data applicators are not able to correct an error, or when in one round any one of the redundancy data applicators was able to correct all errors.

14. System comprising an apparatus according to one of claims 1 to 13, wherein the redundancy data (26) of the second systematic forward error protection code are embedded in the headers of the data packet in a skippable manner, in that the headers of the data packets include a length indication indicating a length of the redundancy data of the second systematic forward error protection code included in the data packets, and a parser for parsing the header of the data packets that is implemented to evaluate the length indication in the data packets to continue parsing following the redundancy data of the second systematic forward error protection code.

15. Method for decoding a packet-based transport stream transporting data packets that are protected with a first systematic forward error protection code and encapsulated, and redundancy data of the first systematic FEC code, comprising:
filling a correction table with the data packets and redundancy data of the first systematic FEC code from payload data portions of transport stream packets of the packet-based transport stream, wherein the redundancy data of the first systematic forward error protection code protect the data packets with which the correction table is filled;
correcting an error in the data packets with which the correction table is filled by recursively evaluating the redundancy data of the first systematic forward error protection code in rounds,
**characterized in that**
redundancy data of a second systematic error protection code included in each data packet and protecting payload data in the respective data packet, and redundancy data of a third systematic forward error protection code protecting the payload data portions in the transport stream packets exist, and that
the correction in a round of the recursive evaluation comprises evaluation of the redundancy data of the first, second and third systematic forward error protection codes.

16. Computer program having a program code for performing the method according to claim 15 when the program runs on a computer.

## Revendications

1. Dispositif pour décoder un flux de transport à base de paquets (14) qui transporte des paquets de données (20, 22) protégés par un premier code de protection contre une erreur directe systématique et encapsulés et des données de redondance (24) du premier code de protection contre une erreur directe systématique, avec
un entremêleur (32) destiné à remplir un tableau de correction (36) par les paquets de données (20, 22) et les données de redondance (24) du premier code de protection contre une erreur directe systématique de segments de données utiles (18) de paquets de flux de transport (14a, 14e) du flux de transport à base de paquets (14), les données de redondance du premier code de protection contre une erreur directe systématique protégeant les paquets de données (20, 22) par lesquels est rempli le tableau de correction; et
un correcteur (34) destiné à corriger une erreur dans les paquets de données par lesquels est rempli le tableau de correction, par évaluation récurrente par passages des données de redondance (24) du premier code de protection contre une erreur directe systématique,
**caractérisé par le fait que**
sont présentes les données de redondance (26) d'un deuxième code de protection contre une erreur directe systématique contenues dans chaque paquet de données et protégeant les données utiles (28) dans le paquet de données respectif, et les données de redondance (16) d'un troisième code de protection contre une erreur directe systématique protégeant les segments de données utiles (18) dans les paquets de flux de transport, et que
le correcteur (34) est réalisé pour évaluer lors de la correction,
dans un passage de l'évaluation récurrente, les données de redondance du premier, du deuxième et du troisième code de protection contre une erreur directe systématique.

2. Dispositif selon la revendication 1, dans lequel une grandeur de paquet maximale des paquets de données (20, 22) est plus petite qu'une grandeur du tableau de correction, et une grandeur de paquet maximale des paquets de flux de transport (14a-14e) est plus petite qu'une grandeur du tableau de correction (36).

3. Dispositif selon la revendication 1 ou 2, dans lequel les paquets de données sont des paquets d'IP.

4. Dispositif selon l'une des revendications 1 à 3, dans lequel chaque paquet de flux de transport présente un segment de données utiles et un mot de données de redondance associé (16) qui forment ensemble un mot dé code systématique du troisième code de protection contre une erreur directe systématique.

5. Dispositif selon l'une des revendications 1 à 4, dans lequel les paquets de flux de transport sont des paquets de MPEG-TS.

6. Dispositif selon l'une des revendications 1 à 5, dans lequel le premier code de protection contre une erreur directe systématique est un code MPE-FEC.

7. Dispositif selon l'une des revendications 1 à 6, dans lequel l'entremêleur (32) est réalisé pour remplir le tableau de correction (36) par colonne par les paquets de données (20, 22), les données de redondance (24) du premier code de protection contre une erreur directe systématique présentent un mot de redondance par ligne du tableau de correction (36) et chaque mot de redondance des données de redondance (24) du premier code de protection contre une erreur directe systématique constitue, avec un segment des paquets de données dans la ligne respective du tableau de correction, un mot de code systématique du premier code de protection contre une erreur systématique.

8. Dispositif selon l'une des revendications 1 à 7, dans lequel chaque paquet de données présente un mot de données de redondance qui constitue, ensemble avec un reste disjoint du paquet de données respectif - élargi de bits de remplissage prédéterminés à une longueur constante prédéterminée - un mot de code systématique du deuxième code de protection contre une erreur directe systématique.

9. Dispositif selon l'une des revendications 1 à 8, dans lequel le correcteur (34) est réalisé pour établir un protocole, pendant l'évaluation récurrente, des parties du tableau de correction qui ont déjà été identifiées comme étant exemptes d'erreur, une partie restante du tableau de correction représentant une partie à corriger.

10. Dispositif selon l'une des revendications 1 à 9, dans lequel le correcteur (34) est réalisé pour évaluer tout d'abord, dans un premier passage, les données de redondance de l'un prédéterminé parmi les premier au troisième codes de protection contre une erreur directe systématique, pour identifier les paquets comme étant exempts d'erreur ou, s'il est identifié une erreur dans ces derniers, corriger ces derniers dans la mesure du possible et, dans la mesure où cela n'est pas possible, les identifier comme étant erronés, pour obtenir une première partie erronée des paquets de données et, au cas où il est identifié une erreur lors de l'évaluation des données de redondance du premier prédéterminé parmi les premier au troisième codes de protection contre une erreur directe systématique et qu'une correction totale n'est pas possible, évaluer les données de redondance du premier prédéterminé différent parmi les premier au troisième codes de protection contre une erreur directe systématique, pour corriger les erreurs dans la première partie erronée des paquets de données, pour obtenir une partie partielle véritable de la première partie erronée comme deuxième partie erronée, et corriger les erreurs dans la deuxième partie erronée dans un passage suivant le premier passage.

11. Dispositif selon l'une des revendications 1 à 10, dans lequel les premier au troisième codes de protection contre une erreur directe systématique appartiennent à des couches de protocole OSI différentes.

12. Dispositif selon l'une des revendications 1 à 11, dans lequel le correcteur (34) présente les caractéristiques suivantes:
un premier applicateur de données de redondance (34a) destiné à appliquer les données de redondance (24) du premier code de protection contre une erreur directe systématique aux paquets de données (20, 22) pour corriger les erreurs dans les paquets de données et masquer les erreurs restantes dans les paquets de données;
un deuxième applicateur de données de redondance (34b) destiné à appliquer les données de redondance (26) du deuxième code de protection contre une erreur directe systématique aux données utiles des paquets de données, pour corriger des erreurs dans les données utiles des paquets de données et masquer les erreurs restantes dans les données utiles des paquets de données; et
un troisième applicateur de données de redondance (34c) destiné à appliquer les données de redondance (16) du troisième code de protection contre une erreur directe systématique aux paquets de données (20, 22) et aux données de redondance du premier code de protection contre une erreur directe systématique, pour corriger des erreurs dans les paquets de données et les données de redondance du premier code de protection contre une erreur directe systématique et masquer les erreurs restantes dans les paquets de données et masquer les données de redondance du premier code de protection contre une erreur directe systématique,
chacun des trois applicateurs de données de redondance étant actif à chaque passage, à l'exception du dernier passage.

13. Dispositif selon la revendication 12, dans lequel le correcteur (34) est réalisé pour interrompre la correction lorsque dans un passage tous les applicateurs de données de redondance ne sont pas à même de corriger une erreur, ou lorsque dans un passage l'un quelconque des applicateurs de données de redondance était à même de corriger toutes les erreurs.

14. Système avec un dispositif selon l'une des revendications 1 à 13, dans lequel les données de redondance (26) du deuxième code de protection contre une erreur directe systématique sont incorporées de manière à pouvoir être sautées dans les en-têtes des paquets de données en ce qu'il est contenu dans les en-têtes des paquets de données une indication de longueur indiquant une longueur des données de redondance contenues dans les paquets de données du deuxième code de protection contre une erreur directe systématique, et un analyseur syntaxique destiné à analyser de manière syntaxique les en-têtes des paquets de données qui est réalisé pour évaluer l'indication de longueur dans les paquets de données, pour continuer l'analyse syntaxique à la suite sur les données de redondance du deuxième code de protection contre une erreurs systématique.

15. Procédé de décodage d'un flux de transport à base de paquets qui transporte des paquets de données protégés par un premier code de protection contre une erreur directe systématique et encapsulés et des données de redondance du premier code FEC systématique, avec le fait de
remplir un tableau de correction par les paquets de données et les données de redondance du premier code FEC systématique de segments de données utiles de paquets du flux de transport à base de paquets, les données de redondance du premier code de protection contre une erreur directe systématique protégeant les paquets de données par lesquels est rempli le tableau de correction; et
corriger une erreur dans les paquets de données par lesquels est rempli le tableau de correction par évaluation récurrente par passages des données de redondance du premier code de protection contre une erreur directe systématique,
**caractérisé par le fait que**
sont présentes les données de redondance d'un deuxième code de protection de correction d'erreur systématique qui sont contenues dans chaque paquet de données et protègent les données utiles dans le paquet de données respectif, et les données de redondance d'un troisième code de protection contre une erreur directe systématique qui protègent les segments de données utiles dans les paquets de flux de transport, et que
la correction présente, dans un passage de l'évaluation récurrente, l'évaluation des données de redondance du premier, du deuxième et du troisième code de protection contre une erreur directe systématique.

16. Programme d'ordinateur avec un code de programme pour réaliser le procédé selon la revendication 15 lorsque le programme est exécuté sur un ordinateur.
